(19) Europäisches Patentamt
European Patent Office
Office européen des brevets

(11) EP 2 161 681 A1

(12) **EUROPEAN PATENT APPLICATION**

(43) Date of publication:
**10.03.2010 Bulletin 2010/10**

(51) Int Cl.:
***G06Q 10/00*** *(2006.01)*

(21) Application number: **09168021.5**

(22) Date of filing: **17.08.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **15.08.2008 US 89120 P**

(71) Applicants:
- **Luzon, Yossef**
  **60409 Or Yehuda (IL)**
- **Karmon, Kfir**
  **60409 Or Yehuda (IL)**

(72) Inventors:
- **Luzon, Yossef**
  **Or Yehuda 60409 (IL)**
- **Penn, Michael**
  **Haifa 32202 (IL)**
- **Mandelbaum, Avishai**
  **Haifa 32000 (IL)**

(74) Representative: **Beck & Rössig**
**European Patent Attorneys**
**Cuvilliésstrasse 14**
**81679 München (DE)**

(54) **Fluid based resource allocation and appointment scheduling system and method**

(57) A scheduling system and method for managing resource allocation by service providers. The system includes a type-constrained appointment book wherein appointment windows are assigned to client types and a scheduler for receiving scheduling requests clients, identifying their characteristic client-type and allocating at least one appointment window assigned to the characteristic client-type to the client. The appointment book is constrained using a fluid model of client flow and may be optimized to suit various requirements.

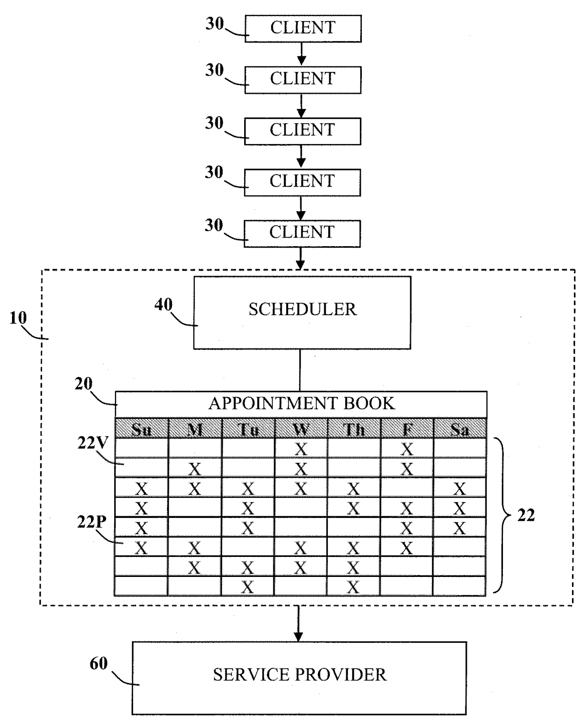


Fig. 1

EP 2 161 681 A1

Printed by Jouve, 75001 PARIS (FR)

## Description

### FIELD OF THE INVENTION

The present invention is directed to providing a scheduling system for managing resource allocation by service provider systems. More specifically, embodiments of the invention are directed to providing a type-constrained appointment book or resource allocation chart) based upon historical data pertaining to the distribution of arrival times of a plurality of client types.

### BACKGROUND OF THE INVENTION

Queues generally develop where a service provider is required to serve a plurality of clients. Scheduling systems may be used to manage the allocation of resources to the clients and thereby control queue size or clients waiting times.

Where clients arrive at the service provider individually, an appointment book may use a simple first-come-first-scheduled (FCFS) queue discipline in which clients are scheduled appointments in the order of their arrival.

The FCFS queue discipline is intuitive and simple to apply but may be inefficient. Consider the case in which an early client requiring a long service time arrives at the service provider. Because the early client is scheduled first a 'bottle-neck' may develop if a number of later clients arrive while the early client is being served.

Appointment scheduling is an important consideration for the management of a variety of areas in which queues must be controlled. Single Server Queuing (SSQ) systems are used to model these stochastic environments by defining a set of client types arriving at a server during a given time interval. Each client type is characterized by its individual mean-arrival-rate and processing-time.

SSQ systems may be used to model computer networks, communication systems, manufacturing systems, production lines, internet servers, health care appointment scheduling and other systems in which providers serve multiple customers with distinctive needs. Many objective functions may be considered for a SSQ system, such as the minimum average waiting time and the minimum makespan (the earliest time at which the last client is served). In most cases, stochastic networks are notoriously difficult to control Moreover, if clients' requests for service arrive over time, then the problem of deterministically scheduling appointments to a single server using the minimum average completion time objective is known to be NP-hard.

In order to overcome the complexity inherent in stochastic processes, fluid approximations may be used. These approximations neglect the variance associated with the stochastic processes being modeled and depend only upon the mean flow rate. For example, United States Patent Application Number 2003/158,611 to Weiss, titled "Control of items in a complex system by using fluid models and solving continuous linear programs" describes a method for the scheduling of actions and the allocation of resources in which the system is modeled as a fluid and the control problem is formulated as a continuous linear program. Likewise United States Patent Numbers 7,277,391, titled "Active queue management using proportional control and rate-based information", and 7,298,699, titled "Rate-based integral control scheme for active queue management", both to Aweya et al. as well as United States Patent Application Number 2002/188,648, titled "Active queue management with flow proportional buffering", to Ouellette et al., all describe the use of nonlinear fluid-flow models in active queue management methods for congestion control in order to maintain minimal queue size.

Scheduling solutions based upon the above fluid models are less intuitive and more complicated to apply as the aforementioned appointment book using simple FCFS queue discipline. The need remains, therefore, for a fluid based scheduling solution which is readily applicable to a variety of situations. The present invention addresses this need.

### SUMMARY OF THE INVENTION

Embodiments of the current invention are directed towards providing scheduling systems for managing resource allocation by at least one service provider. The system preferably comprises at least one type-constrained appointment book comprising a plurality of appointment windows wherein the appointment windows are assigned to client types. Optionally the system further comprise a scheduler for receiving scheduling requests from at least one client, identifying the characteristic client-type of the client and allocating at least one appointment window assigned to the characteristic client-type to the client.

Typically, the type constrained appointment book is configured using an optimization algorithm. Such an optimization algorithm may be based upon historical data pertaining to the client types. In various embodiments, the historical data relates to at least one factor selected from a group consisting of demand by clients of the client type, arrival rates of clients of the client type, processing times for clients of the client type and service capacity of the service provider. Alternatively, the optimization algorithm is based upon future demand data pertaining to the client types.

Advantageously, the optimization algorithm may be based upon a model wherein clients of each client type are modeled as a fluid. Typically, the fluid is characterized by at least one of a mean arrival rate and a processing time. According to some embodiments, the mean arrival rate varies over time. Typically, the optimization algorithm is optimized for at least one parameter selected from a group consisting of: minimal flow-time, minimal makespan - equitable queuing and minimal waiting time. Optionally, the scheduling system is for managing resource allocation by at least two service providers wherein type-constrained appointment books are prepared for each service provider.

Variously, the service provider may be selected from a group consisting of internet service providers (ISPs), wireless communication networks, flexible manufacturing plants, power distribution regulators, call centers, transport control systems and so on.

The client types are typically characterized by at least one factor selected from a group consisting of average demand by clients of the client type, arrival rates of clients of the client type, processing times for clients of the client type.

Other embodiments of the invention are directed towards teaching a method for managing resource allocation by at least one service provider to a plurality of clients, the method comprising the following steps: step (a) - preparing at least one type-constrained appointment book comprising a plurality of appointment windows, the appointment windows being assigned to client types; step (b) - receiving a processing request from at least one arriving client; step (c) - identifying a characteristic client-type of the arriving client; step (d) - allocating to the arriving client, an appointment window assigned to the characteristic client-type.

Optionally, step (a) may comprise the following sub-steps: step (a1) - obtaining historical data pertaining to the client types; step (a2) - modeling arrival of the clients of each client type are modeled as a fluid; step (a3) - solving an optimization problem, optimized for at least one parameter selected from a group consisting of: minimal flow-time, minimal makespan - equitable queuing, minimal waiting time or some desired prioritization rule. The historical data may relate to at least one factor selected from a group consisting of demand by clients of the client type, arrival rates of clients of the client type, processing times for clients of the client type and service capacity of the service provider. Each fluid of the model may be characterized by at least one of a mean arrival rate, a processing time and a time-varying mean arrival rate distribution.

Some embodiments of the method are provided for managing resource allocation by at least two service providers wherein, during step (a) type-constrained appointment books are prepared for each the service provider.

Other embodiments of the method are provided for managing resource allocation for at least one service provider selected from a group consisting of internet service providers (ISPs), wireless communication networks, flexible manufacturing plants, power distribution regulators, call centers and transport control systems.

## BRIEF DESCRIPTION OF THE FIGURES

For a better understanding of the invention and to show how it may be carried into effect, reference will now be made, purely by way of example, to the accompanying drawings.

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention; the description taken with the drawings making apparent to those skilled in the art how the several forms of the invention may be embodied in practice. In the accompanying drawings:

Fig. 1 is block diagram representing a PRIOR ART scheduling system showing a plurality of clients of various types scheduled to be processed by a single service provider;

Fig. 2 is a block diagram of a scheduling system showing a plurality of clients of various types scheduled to be processed by a single service provider using a type-constrained appointment book according to an embodiment of the invention;

Fig. 3a is an illustration of a single server fluid system serving multiple fluid-types each having characteristic constant arrival rates;

Fig. 3b is an illustration of another single server fluid system serving multiple fluid-types each having characteristic time varying arrival rates;

Fig. 4 is a graph depicting the variation of the accumulated work function for a minimal makespan - equitable queueing queuing policy;

Fig. 5 is a graph depicting the variation of the accumulated work function for a minimal wait time queuing policy;

Fig. 6 is a graph representing the mean arrival rates for two client types;

Fig. 7 shows an exemplary type-constrained appointment book for the two client types shown in Fig. 6, and

Fig. 8 is a graph representing the rate of improvement in waiting time for a scheduling system using the type constrained appointment book rather than a standard first-come-first-scheduled policy;

Fig. 9 is a block diagram representing a tandem network having two servers;
Fig. 10 is a schematic representation of the clients of the three client types arriving at the tandem network;
Fig. 11 is a schematic representation of synchronized type-constrained appointment books for the tandem network according to another embodiment of the invention;
Figs. 12a and 12b represent the arrival rates of clients in a system having recurring characteristics, and
Fig. 13 illustrates the correspondence between recurring cycles and their appointment books.

## DESCRIPTION OF THE PREFERRED EMBODIMENTS

Reference is now made to Fig. 1 which is a block diagram representing a scheduling system 10 of the PRIOR ART. The scheduling system 10 includes an appointment book 20 and a scheduler 40 configured to schedule multiple clients 30 for processing by a single service provider 60.

Clients 30 typically arrive at the server individually in a stochastic manner each client having a unique arrival time. The time taken by the service provider to serve a client is known as its processing time or service time.

The appointment book 20 contains multiple appointment windows 22. Appointment windows 22 are characterized as either populated 22P or vacant 22V.

Typically, appointment windows 22 are calendared time slots of various types, corresponding to the various client types, into which individual clients are to be assigned. In such systems a random number of appointment requests arrive. The scheduler 40 reviews these requests and assigns them to some future appointment window 22. The scheduler 40 typically assigns a client to a future appointment window 22 prior to knowing future demand.

Using a typical first-come-first-scheduled (FCFS) queue discipline, when each client 30 arrives at the service provider 60, the client 30 is assigned to the first vacant appointment window 22V. The next arriving client is assigned the next vacant appointment window and so on.

It is noted that in the PRIOR ART scheduling system. The appointment book 20 is unbiased, all clients being processed equally. Appointment windows 22 are not type-constrained and may be assigned to any client. In particular clients with long or short processing times and differing arrival rates are all treated equally.

For illustration purposes, consider a case of an operating theater in a hospital (the service provider) processing various operations (clients). The operating theater may be used for a long but infrequent operation, say an organ transplant or a short more frequent operation, say an appendectomy. Using a simple FCFS system, when the organ transplant requests the use of the operating theater it is allocated the next available vacant appointment window. Any appendectomy requests made subsequently will be held in a queue until the operating theater is free.

As outlined in more detail below, scheduling systems according to other embodiments of the invention include internet service providers (ISPs), wireless communication networks, flexible manufacturing plants, power distribution regulators, call centers, transport control and the like.

Referring now to Fig. 2 is a second block diagram represents an improved scheduling system 100 according to an exemplary embodiment of the current invention. It is a particular feature of the improved scheduling system 100 that in contradistinction to the unbiased appointment book 20 of the PRIOR ART, a novel type-constrained appointment book 120 is used by the scheduler 140 to schedule multiple clients 130 according to their client type.

The type-constrained appointment book 120 contains appointment windows 122, 124, 126 which are pre-assigned to specific client types. Thus the type-constrained appointment book 120 extends the simple FCFS scheduling system such that, when a client 130 of a particular client-type arrives at the service provider 60, the client 130 is assigned to the first vacant appointment window 122V pre-assigned to its particular client-type.

It is particularly noted that although embodiments of the type-constrained appointment book 120 enable sophisticated queuing disciplines to be applied to the scheduling system 100, the system is essentially as simple and as intuitive as the basic FCFS system and is thus easily applied by the scheduler.

In embodiments of the present invention, appointment windows 122, 124, 126 of the type-constrained appointment book 120 are assigned to particular client-types according to some optimization algorithm, for example minimizing client waiting times. Such optimization algorithms may be based upon historical data pertaining to demand, arrival rates, processing times and the like for each client type as well as capacity of the service provider 60.

Some possible system models used to generate type-constrained appointment books according to various embodiments of the invention are outlined below. These may be used to preconfigure the type-constrained appointment book 120 according to a variety of models and optimization requirements. It will be appreciated that other algorithms may be employed using other models as required.

### Single Server System Models

In a stochastic queueing system for a single service provider, several types of client arrive at the server, during a finite time interval of length T. After time T the server typically continues working but the customers cease to arrive.

A single server having deterministic arrival and service rates corresponding to the mean arrival and service rates of the considered stochastic system, constitutes a deterministic discrete system. Recognizing the optimal scheduling policy for this deterministic system is a hard problem. However a solution may be obtained by relaxing the stochastic model, modeling the discrete system as a fluid system.

It is noted that much literature exists relating to fluid models as relaxations to more complicated systems. Nevertheless, control solutions for fluid systems such as those described herein have not been previously received an appropriate mathematical analysis. Some limited analysis has been presented for fluid models having constant fluid arrival rates, particularly in the work of Weiss. However, little or no analysis exists pertaining to systems involving time-varying fluid arrival rates which better model real life trends of demand for service.

The relaxed fluid system is equivalent to a system in which customers may be served simultaneously by the server and the integrality of the number of customers present at time t is relaxed. The structure of an optimal policy for the relaxed fluid problem may reveal the structure of an optimal scheduling policy for the original stochastic system. The optimal solution for such fluid systems may be used to obtain an optimal policy for constructing a scheduling heuristic for the original stochastic system. This heuristic may then be used for preparing the type-constrained appointment book.

The treatment below considers an embodiment of the invention in which a single server queuing system provides service to clients classified into I client-types. Clients arrive during a time interval T and the server provides the service during a makespan time $T_s$ which may proceed beyond T. Clients of each client-type i arrive according to some general distribution characterized by a time-varying mean-arrival rate $\lambda_i(t)$, $t \geq 0$, for all client-types i. The service rates for each client-type are denoted by the constants $\mu_i$, for all client-types i. Note that, upon completion of service, each customer departs from the system.

**Constant Flow Models**

Reference is now made to Fig. 3a, showing an illustration of a first model of a single server fluid system serving I types of fluids each having a constant arrival rate $\lambda_i$. This model is a deterministic fluid analogue to the original stochastic system described above. Although discrete entities move stochastically through the server in the original system, these are replaced by a continuous fluid flow in the fluid model. The service resources are shared among multiple activities simultaneously. Here an algorithm is used to minimize the total flow-time (i.e., the time that passes from the arrival until the departure of a unit of fluid) of the fluids processed by the server.

This problem may be solved using the 'cμ-rule' in which a cost value of $c_i$ is assigned to servicing a client of client-type i and a static priority rule is indexed by $c_i\mu_i$. The fluid type with the highest $c_i\mu_i$ is given the highest priority (If $c_i\mu_i = c_j\mu_j$ for some i and j, then the selection between i and j is arbitrary). For simplicity we consider here the unweighted case with $c_i = 1$ for all i, such that the fluid with the largest service rate is prioritized i.e. the client which is processed quickest is processed first.

The corresponding fluid control optimization problem is given by:

$$minimize \quad \int_0^\infty \sum_{1\leq i\leq I} x_i(t)dt \qquad (1)$$

indicating that the objective is to minimize the total flow-time. The optimization is subject to the following constraints:

$$x_i(t) = \lambda_i \min\{t, T\} - \mu_i T_i(t) \qquad i = 1, 2, \ldots, I,\ t \geq 0 \qquad (2)$$

$$0 \leq \sum_{i\in\sigma} \big(T_i(t_2) - T_i(t_1)\big) \leq t_2 - t_1 \qquad \forall\, t_2 > t_1, t_1 \geq 0 \qquad (3)$$

$$x_i(t) \geq 0,\ \ T_i(t) \geq 0 \qquad (4)$$

Equation (2) represents the dynamics of the system. Let $x_i(t) \geq 0$ be the total amount of fluid of type i accumulated in the buffers at time t. The term $\lambda_i \cdot t$ represents the number of clients of type I arriving up to time t, where $\lambda_i = 0$ for all t > T. $\mu_i$ denotes the service rate of fluid of type i and the function $T_i(t) \geq 0$ denotes the total amount of time the server devotes to processing a fluid of type i, during the time interval [0, t].

Equation (3) represents an aggregated feasibility constraint. The goal is to find optimal control functions $T_i(t)$, for $0 \leq i \leq I$. Note, that if the minimum total flow-time objective is attained then so is the minimum total waiting time.

In embodiments of the present invention, historical mean arrival-rates and processing rates for each client type may be used with the above described optimization solution in order to construct a predetermined type-constrained appointment book prior to the arrival of the first client to the scheduler. Appointment windows within the appointment book are assigned to specific client-types in advance. As clients stochastically arrive, they are assigned appointment-windows, which are already assigned to their client-type.

**Variable Flow Models**

Reference is now made to Fig. 3b, showing an illustration of a second model of a single server fluid system serving I types of fluid. The second model represents another deterministic fluid analogue to the original stochastic system described above. However, unlike the first model, in which each fluid has a constant mean arrival rate, in the second model the mean arrival rate for each fluid varies over time. The distribution of the mean arrival rate for each fluid is therefore denoted as $\lambda_i(t)$, which is assumed to be a non-negative integrable function, defined over [0, T]. The service rate of fluids of type i is denoted by $\mu_i = 1/p_i$, where $p_i$ is the processing time per unit of fluid of type i.

Let $\sigma = \{1, 2, \ldots, I\}$ be the set of the I types of fluids processed by the server. Assuming there are I buffers, one for each type of fluid, the total amount of fluid of type i present in each buffer at time t is denoted $x_i(t)$, with $x_i(t) \geq 0$. The amount of fluid of type i initially present in the system is denoted by $x_i(0)$. The function $T_i(t)$ denotes the total amount of time the server spends serving fluid of type i during the time interval [0, t].

Thus the non-constant arrival rate system may be defined as follows:

$$x_i(t) = x_i(0) + \int_0^{t \wedge T} \lambda_i(u)du - \mu_i T_i(t) \qquad i = 1, 2, \ldots, I \qquad (7)$$

$$0 \leq \sum_{i \in \sigma} \big(T_i(t_2) - T_i(t_1)\big) \leq t_2 - t_1 \qquad \forall\, t_2 > t_1, t_1 \geq 0, \qquad (8)$$

$$x_i(t) \geq 0,\ \ T_i(t) \geq 0. \qquad (9)$$

where $t \wedge T = \min\{t, T\}$.

Equation (7) represents the dynamics of the system with the amount of fluid in each buffer equaling the initial amount of fluid of type i (given by $x_i(0)$) plus the amount of fluid of type i that has arrived during the period [0, t] minus the amount of fluid of type i processed during [0, t]. Equation (8) represents an aggregate feasibility constraint.

As with the constant mean arrival rate equations described in the first model above, mean arrival-rates and processing rates for each client type may be used in conjunction with optimization solutions based upon the time varying model in order to construct an alternative predetermined type-constrained appointment book for use by the scheduler in other embodiments of the invention.

Other embodiments of the invention use alternative queuing policies. By way of non limiting example only, embodiments using two different queuing policies are described below. The first queuing policy minimizes makespan of the service provider and the second minimizes the waiting time.

**Minimal Makespan Equitable Queuing Policy**

In embodiments of the invention using a queuing policy to minimize the makespan of the service provider while assigning each fluid type a certain varying proportion of the server capacity. Such a policy assures that the ratio between the amount of fluid queued in a buffer, and the total amount of fluid which has arrived to that buffer, since the last time all the buffers were empty, is kept equal between the various fluid types.

In addition, the equitable queueing policy may assure that the stream of any type of fluid is never completely blocked. In the context of appointment systems, following such a policy means that each customer type is provided with a share of the server capacity which corresponds to its demand.

It will be appreciated that a minimal makespan equitable queueing policy (MEQ - SSFR) is applicable in a variety of environments in which service strategies of equitable nature are inherently useful, such as in an internet network environment, power control, energy management and the like.

For example, optimal control policies are desired by appointment scheduling operators as well as by internet service providers (ISP). ISPs are particularly interested in servers' capacity management and resource control. The single server system may represent a resource of an internet service provider.

An ISP provides service for various customer types requiring varying bandwidth communication channels. A bandwidth of a channel is the capacity allocated for information transmissions where arrival rate functions can describe the means of bandwidth demand requested by the ISP's clients.

Over the Internet equitable service is a natural requirement. A Web Hosting Service (WHS) is a type of Internet hosting service that allows individuals as well as organizations to provide their own websites accessible via the World Wide Web. Web hosts provide space on a server, for the use of clients, providing Internet connectivity, typically in a data center.

Web hosts aspire to provide equitable service for their clients. An important consideration in designing and configuring WHS or ISP systems is the optimal capacity ratio for a server to devote to each of its client types in any unit of time. Since each arrival process depends on time, so should this ratio.

An optimal control solution for this problem may be constructed using a minimal makespan queuing policy in which the objective is to minimize the time required to serve the initial fluids and the fluids that arrive during the interval [0, T], while keeping equitable queues. The goal is therefore to find the optimal control functions $T_i(t)$, for all fluid types which achieve this objective. The corresponding fluid control optimization problem may be given by:

$$minimize \int_0^\infty 1\left\{ \sum_{1\leq i\leq I} x_i(t) > 0 \right\} dt \qquad (10)$$

subject to

$$x_i(t) = x_i(0) + \int_0^{t\wedge T} \lambda_i(u)du - \mu_i T_i(t) \qquad i = 1,2,\ldots,I,\ \ t \geq 0 \qquad (11)$$

$$\frac{x_i(t)}{x_j(t)} = \psi_{i,j}(t) \qquad t \geq 0,\ i \neq j,\ x_j(t) > 0 \qquad (12)$$

$$0 \leq \sum_{i\in\sigma} \left(T_i(t_2) - T_i(t_1)\right) \leq t_2 - t_1 \qquad \forall\, t_2 > t_1, t_1 \geq 0, \qquad (13)$$

$$x_i(t) \geq 0,\ \ T_i(t) \geq 0. \qquad (14)$$

where

$$\psi_{i,j}(t) = \frac{\hat{x}_i(\beta(t)) + \int_{\beta(t)}^{t\wedge T} \lambda_i(u)du}{\hat{x}_j(\beta(t)) + \int_{\beta(t)}^{t\wedge T} \lambda_j(u)du}.$$

The objective function (10), represents the total time the system is not empty. Constraints (11), (13) and (14) are the same as in the abovedescribed fluid models. Constraint (12) is responsible for assuring that the required proportions of the queue lengths of the various fluid types are maintained. The target proportion is indicated by the function $\psi_{i,j}(\cdot)$ which takes nonnegative real values. The function $\beta(\cdot)$ indicates time points where fluid may start to accumulate in the buffers or be drained out.

In terms of the original stochastic system, constraint (12) may be interpreted as a requirement that the proportion between the amount of customers of type i and the amount of customers of type j, must be equal to $\psi_{i,j}(\cdot)$, which is the proportion of their demands, for all t. The demand of customers of type i is expressed by the total amount of work that has arrived of that type, since the last time a queue started to form.

The advantages of such a model for functional programming in general and of recursion in particular are noted. In computer science, functional programming is a programming paradigm which prefers to treat computation as the evaluation of mathematical functions and avoids state and mutable data as common in imperative programming. In general, application of functions as a programming tool has various advantages over other application styles which emphasize changes in state.

Let C(t), $t \geq 0$ denote the accumulated work function: work is measured in units of time, and C(t) stands for the work that has arrived to the server until time t, including the initial work, namely,

$$C(t) = \sum_{i \in \sigma} \frac{x_i(0) + \int_0^t \lambda_i(u)du}{\mu_i} = \sum_{i \in \sigma} p_i(x_i(0) + \int_0^t \lambda_i(u)du). \qquad (15)$$

The function C(t), as defined above, is an increasing function of t. Consider an arbitrary time interval $[t_1, t_2]$. At any time during this interval only one of two states of the system is possible. Either $C(t, t_1) > t - t_1$ or $C(t, t_1) \leq t - t_1$, where $C(t, t_1)$ is defined by $C(t, t_1) = C(t) - C(t_1)$.

For any work conserving policy, if the first possibility $C(t, t_1) > t - t_1$ applies then fluid accumulates in the buffers, i.e., there is a wait. This stops at the moment the amount of work becomes equal to the time that has elapsed $C(t, t_1) = t - t_1$, after which, the other possibility $C(t, t_1) \leq t - t_1$ may apply. This moment in time is referred to as a drained point since at exactly that moment the buffers become empty.

If $C(t, t_1) = t - t_1$ at all times during the interval $[t_1, t_2]$ then both $t_1$ and $t_2$ are considered consequent draining points. The accumulated work $C(t) \geq 0$ is a continuous function in time, thus, the time which passes from one drained point to the one that follows must be of some non-negative length. Note that since the server uses its full capacity whenever needed, then fluid accumulates in the buffers only when the work rate $\partial C(t)/\partial t > 1$. It is clear that for long enough time horizon, such an occurrence may be repeated.

The above observation may be used to construct controls. The considered time horizon [0, T] may be partitioned into intervals of time between draining points. Referring to Fig. 4, the variation of the work function during these intervals is illustrated graphically. It is noted that at each of the draining points the system repeatedly renews and gets back to a similar state.

Fig. 4 is a graph depicting the work function $C(\cdot)$, the curved line as a function of time. The draining points are denoted by the bold dots appearing along the curved line in the figure. At each of these drained points a coordinate system is defined. Each such diagonally shifted coordinate system is a replica of the original one, where its axis and origin values change accordingly as time increases. For the coordinate system centered upon each draining point the linear lines represent the servers full potential capacity. Each linear line is used to identify the consecutive system origin by either intersecting with C(t) or by having a slope equals to $\partial C(t)/\partial t$ . If the linear line intersects with the function C(t), then the buffers are emptied.

By comparing the linear line slope to $\partial C(t)/\partial t$, for each coordinate system, the points where fluid starts to accumulate can be recognized. For example, consider the first interval $[0, \tau 1]$, in the figure. Note that in this interval $0 \leq t \leq C(t)$. Since some initial work is assumed to be present then $C(0) > 0$. At the first intersection of C(t) with the initial linear line, where $C(t) = t$, the buffers are emptied and the next draining point is defined. Since at that point, $C(\tau_1, 0) = \tau_1$, assuming a work conserving policy, where the server is always fully utilized. This characterization captures the system dynamic behavior.

Thus the graph of Fig. 4 represents the state of the system using a work conserving policy as it evolves in time. During the first interval there is some fluid in the buffers which decreases gradually. At $\tau_1$, the buffers are emptied and remain empty until $\tau_3$, when some fluid flows through the buffers but no queue is formed. The linear lines which originate at each of the draining points are used to illustrate the mentioned behavior. If the function C(t) is below the corresponding linear line it means that the amount of fluid reaching the system is smaller than the total capacity of the server. Hence, fluid does not accumulate in the buffers.

At time $\tau_2$ the curve of C(t) is below the corresponding linear line, both before and after $\tau_2$. This means that the total amount of fluid that has arrived to the system, since $\tau_1$, has reached the server capacity exactly at $\tau_2$ and then declined back. In the interval that follows $\tau_3$, on the other hand, C(t) is above the corresponding linear line, reaches a peak (the queue size is maximized) and then declines back until all fluid is drained at $\tau_4$ and the buffers are emptied.

Queues develop in the first and fourth intervals which are completely drained at time $\tau_1$ and at $\tau_4$ respectively. During the intervals that follow $\tau_1$ and $\tau_2$ as well as during the interval following $\tau_4$ some fluid flows through the server but no fluid accumulates. A queue starts to form again right after $\tau_5$.

In order to solve the optimization problem a step function $\beta(\cdot)$ is defined. For a given t during the period [0, T], $\beta(t)$ is defined as follows:

$$\beta(t) = \begin{cases} 0 & 0 \le t < \tau_1, \\ \tau_i & \tau_i \le t < \tau_{i+1}, \\ \tau_N & \tau_N \le t; \end{cases} \qquad (16)$$

Note that one can defme $\beta(t) = \varepsilon$ where $\varepsilon > 0$, $\varepsilon \downarrow 0$ for all $0 \le t < \tau_1$. $\beta(\cdot)$ corresponds to the elements of a set B, containing all drained points, and the resulting intervals as those illustrated in Fig. 4. The height of the steps of $\beta(\cdot)$, is given by the values of the elements in B which are indicated by the draining points, where the distance between these points indicates the steps length. $\beta(t)$ is an important tool which may be used in the construction of the controls.

Suppose, that for any $[t_1, t_2] \subset [0, T]$, $C(t, t_1) \neq t - t_1$ for all $t \in [t_1, t_2]$. In such a case, and since B is assumed finite, the recursive procedure given below can be used.

For a given $t \in [0, T]$, the function $\beta(t, n)$ is defined, $\beta(t, n)$, $\beta : [0, T] \times N \to [0, T]$ to denote the time indicated by the largest element in B which is smaller than t. For a fixed t, $\beta(t, n)$ is a recursive function on n.

Let,

$$\xi_n(t) = \min_{x \in (\beta(t,n-1),t]} \Big\{ x : C(x) < x + C(\beta(t,n-1)) - \beta(t,n-1) \ and \ \rho(x) = 1$$
$$or \ \ C(x) = x + C(\beta(t,n-1)) - \beta(t,n-1) \Big\}$$

and so we get,

$$\beta(t,n) = \begin{cases} 0 & 0 \le t < \tau_1, \\ \xi_n(t) & \tau_1 \le t \le T, \\ \xi_n(T) & t > T; \end{cases} \qquad (17)$$

where

$$T_1 = \beta(t,1) = \min_{x \in (0,T]} \Big\{ x \Big| C(x) < x \ and \ \rho(x) = 1 \ \ or \ \ C(x) = x \Big\}.$$

After using the recursive function $\beta(t, n)$, all the elements in B are obtained.

If there exist time interval $[t_i, t_{i+1}] \subset [0, T]$, such that C(t) equals to the corresponding linear line for all $t \in [t_i, t_{i+1}]$, then by our previous discussion, $t_i$ defines the corresponding element in B for all such t and $t_{i+1}$ indicates another element in B. As the elements of B are known the definition of $\beta(\cdot)$ is obtained, wether those were calculated recursively or in any other way.

In the context of our original discrete analogue, calls may be received at any $t \neq [0, T]$, where one can choose to define $\lambda(t)$ to be equal zero for all $t > T$. In such situation it is obvious that a lower bound over the value of the MEQ - SSFR objective is T (assuming that there exists i such that $\lambda i(T) > 0$, or else an even smaller bound may be found), since fluid can not be processed before it arrives.

Moreover, one should notice that for any system having $C(T) > T$, $C(T)$ is a lower bound over the value of the optimal solution of the MEQ - SSFR, which is not necessarily achieved. The controls we present in the following proposition solve the MEQ - SSFR optimally.

Proposition: For a given set of service rates and arrival process, described by a set of integrable functions, $\varepsilon > 0$ and $\varepsilon \downarrow 0$, define the time spent by the server, serving customers of type i during the time interval [0, t], for all $i \in \sigma$, as:

$$T_i(t) = \lim_{\epsilon \to 0} T_i(\beta(t)-\epsilon) + \begin{cases} p_i(\hat{x}_i(\beta(t)) + \int_{\beta(t)}^{t\wedge T} \lambda_i(u)du), & if\ \ C(t) \le t + C(\beta(t)) - \beta(t); \\ \frac{p_i(\hat{x}_i(\beta(t)) + \int_{\beta(t)}^{t\wedge T} \lambda_i(u)du)}{\widetilde{C}(t)}(t-\beta(t)), & if\ \ C(t) > t + C(\beta(t)) - \beta(t), \end{cases} \tag{18}$$

where

$$\hat{x}_i(t) = \begin{cases} x_i(0) & \beta(t) = 0, \\ 0 & \text{otherwise,} \end{cases}$$

and

$$\widetilde{C}(t) = \sum_{i \in \sigma} p_i(\hat{x}_i(t) + \int_{\beta(t)}^{t} \lambda_i(u)du),$$

The value of the MEQ - SSFR obtained under these controls is optimal. The function $T_i(t)$ in the proposition is a recursive function. It follows a set of steps which are indicated by $\beta(t)$, $t \ge 0$. The relevant times the server devotes for processing fluids of type i are summed through the various intervals one at a step, starting at the one to which t belongs. In any interval the state of the system is recognized by the two conditions of $T_i(\cdot)$. The term $\beta(t)$- $\varepsilon$ in $T_i(\beta(t)$- e), indicates a point in time for any $\varepsilon > 0$. At this point the next recursion step is initiated, and the rest of the recursion process evolves. The optimal $T_i(\cdot)$ is the limit obtained as $\varepsilon > 0$, $\varepsilon \to 0$.

It will be appreciated that such a recursive procedure may be particularly suited for embodiments of the scheduling system wherein at least a part of the procedure is computerized.

### Minimum Waiting Time - Prioritization Queuing Policy

Turning now to a minimum waiting time queuing policy, it is noted that this may be equivalent to the minimum average completion time objective. As all jobs are available at time 0, the minimum average completion time can be achieved by using the Shortest Processing Time (SPT) rule. However, if the jobs arrive over time, then the deterministic scheduling problem of a single machine with the minimum average completion time objective, is NP-hard and fluid relaxations may be used.

Consider the SSQ system with two types of customers, I = 2, that arrive during the period [0, T]. The arrival process to the server, of customers of type i, may conform to some general distribution which is characterized by its time varying mean arrival rate $\lambda_i(t)$, $t \ge 0$ for both values of i. The service rates are denoted by the constants $\mu_1$ and $\mu_2$, corresponding to the customer types.

The minimum average completion time objective may be used by applying the SPT policy dynamically in time, while the server is led to process as much fluid as possible. As fluid accumulates in the buffers a decision is made as to what type of fluid should be prioritized.

The objective of this queuing policy is to minimize the total waiting time of all the customers initially present in the system, plus the customers that arrive during the interval [0, T]. The corresponding fluid control optimization problem may be given by:

$$minimize \quad \int_0^{\infty} \sum_{i \in \sigma} x_i(t)dt \qquad (20)$$

subject to

$$x_i(t) = x_i(0) + \int_0^{t \wedge T} \lambda_i(u)du - \mu_i T_i(t) \qquad i = 1,2 \qquad (21)$$

$$0 \leq \sum_{i \in \sigma} \big(T_i(t_2) - T_i(t_1)\big) \leq t_2 - t_1 \qquad \forall\, t_2 > t_1, t_1 \geq 0 \qquad (22)$$

$$x_i(t) \geq 0, \;\; T_i(t) \geq 0 \qquad (23)$$

Equation (20) indicates the objective to minimize the total flow-time. The total waiting time of the fluids is obtained by subtracting the sum of service times from the total flow time. Equation (21) represents the dynamics of the system, and constraint (22) is the aggregated feasibility constraint. Our goal is, as before, to find optimal controls, namely, the $T_i(t)$ functions for all i which minimize our objective.

Fig. 5 is a graph depicting the accumulated work function for the minimum wait time queuing policy. The upper curve in Fig. 5 represents the accumulative nondecreasing function $C(\cdot)$. The value of $C(t)$, $t \geq 0$, equals the summation of two other functions: $S_1(t)$ and $S_2(t)$, which are accumulative and nondecreasing as well. These functions represent the amount of work, in units of time, of type 1 and type 2 that has approached the system, respectively. The bold dots on the upper curve of Fig. 5 denote the draining points indicated by the function $\beta(t)$. The lower curve in the figure indicates the function $S_1(t)$, $t \geq 0$.

Following the upper curve in the graph of Fig. 5 note that a queue exists in the first subinterval, i.e., fluid accumulates in the buffers. This queue is mostly caused by the initial amount of fluid which is present at time 0. In between the times $\tau_1$ and $\tau_2$ there is no queue. If a queue is not formed, then the best policy is to process everything that approaches without delay. The optimal policy may be constructed for periods where queue exists. In Fig. 5, for example, fluid accumulates during the interval $[\tau_2, \tau_3]$. Proposition 2 in the sequel provides an optimal control policy for all t.

Along the time axis of the graph of Fig. 5, the relevant intervals are indicated by two headed indexed arrows. The various draining points are indicated by bold dots. In a manner similar to the graph of Fig. 4, the appropriate linear functions $\delta(\cdot)$ are indicated centered upon each draining point. The linear functions denote the potential amount of work that is possible to be processed by the server, as the server is fully utilized.

In analogy to the definition of the set B and the function $\beta(\cdot)$ a set G and corresponding function $\gamma(\cdot)$ may be defined. The bold dotes along the lower curve of the graph depicted in Fig. 5, denote the elements of G indicated by the function $\gamma(t)$, $t \geq 0$, which as defined below.

Consider an interval $[\tau_{n-1}, \tau_n)$ such that $C(t, \tau_{n-1}) > t - \tau_{n-1}$ for all $t \in (\tau_{n-1}, \tau_n)$, where $\tau_n, \tau_{n-1} \in B$, $n \in N$. Suppose $t = \tau_{n-1}$ and assume t increases. Let $\bar{\tau}_1$ be the first drained point of fluid of type 1, where one of the following replication conditions apply:

i. $S_1(t, \tau_{n-1}) < t - \tau_{n-1}$ and $\partial S_1(t)/\partial t = 1$;

ii. $S_1(t, \tau_{n-1}) = t - \tau_{n-1}$;

Now, let $t = \bar{\tau}_1$ and let t grow again, while checking the above conditions. The next draining point, of fluid of type 1, is defined by following the same procedure again, where $S_1(\cdot)$ is used. This process is repeated as long as $\bar{\tau}_l < \tau_n$.

Let $G = \{\bar{\tau}_1, ..., \bar{\tau}_N\}$ denote the set of all times such that $(\bar{\tau}_l, S_1(\bar{\tau}_l)) \in \{(t, S_1(\bar{\tau}_l)) | t \in [\tau_{n-1}, \tau_n)\}$ indicates a drained point, where $\tau_n, \tau_{n-1} \in B$ and $\tau_n < T$, $n, l \in N$. If there exists a time interval $[\bar{\tau}_i, \hat{t}] \subset [\tau_{n-1}, \tau_n]$ for some i, such that $S_1(t)$ is equal to the corresponding linear line, $S_1(t, \tau_i) = t - \bar{\tau}_i$ for all t in the interval $[\bar{\tau}_i, \hat{t}]$, then let $\bar{\tau}_{i+1} = \hat{t}$ indicate the next drained point as an element in G. Following its definition, suppose G is a finite set and thus the elements in G can be recognized by taking a finite number of steps along $[\tau_{n-1}, \tau_n)$. Since there are only two types of fluids, $S_1(\cdot)$ provides us with sufficient information for the way fluid of both types behave. The subintervals are formed while following both curves.

For a given $t \in [\tau_{n-1}, \tau_n]$, $\gamma(t)$ may be defined for $\gamma : [\tau_{n-1}, \tau_n] \rightarrow [\tau_{n-1}, \tau_n]$ as follows:

$$\gamma(t) = \begin{cases} \tau_{n-1} & \tau_{n-1} \le t < \bar{\tau}_1, \\ \bar{\tau}_i & \bar{\tau}_i \le t < \bar{\tau}_{i+1}, \\ \bar{\tau}_{\bar{N}} & \bar{\tau}_{\bar{N}} \le t \le \tau_n; \end{cases} \tag{24}$$

Thus $\gamma(\cdot)$ is a step function which is defined once the values of the relevant origin points are known. Note that one can define $\gamma(t) = \tau_{n-1} + \varepsilon$ where $\varepsilon > 0$, $\varepsilon \downarrow 0$ for all $\tau_{n-1} \le t < \bar{\tau}_1$.

For a given couple of service rates and arrival process, described by integrable functions, $\varepsilon > 0$ and $\varepsilon \downarrow 0$, the above treatment may be used to propose the following optimal control functions:

$$T_1(t) = \begin{cases} T_1(\beta(t) - \epsilon) + p_1\left(\hat{x}_1(\beta(t)) + \int_{\beta(t)}^{t \wedge T} \lambda_1(u)du\right), & \textit{if} \;\; C(t) \le \delta(t); \\ & \textit{else} \\ T_1(\gamma(t) - \epsilon) + (t - \gamma(t)), & \textit{if} \;\; S_1(t) > t + S_1(\gamma(t)) - \gamma(t) \\ T_1(\gamma(t) - \epsilon) + \widetilde{S}_1(t), & \textit{if} \;\; S_1(t) \le t + S_1(\gamma(t)) - \gamma(t); \end{cases} \tag{25}$$

$$T_2(t) = \begin{cases} T_2(\beta(t) - \epsilon) + p_2\left(\hat{x}_2(\beta(t)) + \int_{\beta(t)}^{t \wedge T} \lambda_2(u)du\right), & \textit{if} \;\; C(t) \le \delta(t); \\ & \textit{else} \\ T_2(\gamma(t) - \epsilon), & \textit{if} \;\; S_1(t) > t + S_1(\gamma(t)) - \gamma(t) \\ T_2(\gamma(t) - \epsilon) + (t - \gamma(t)) - \widetilde{S}_1(t), & \textit{if} \;\; S_1(t) \le t + S_1(\gamma(t)) - \gamma(t); \end{cases} \tag{26}$$

where

$$\widetilde{S}_i(t) = p_i\left(x_i(\gamma(t)) + \int_{\gamma(t)}^{t} \lambda_i(u)du\right)$$

and $T_i(t)$ represents the time spent by the server for serving customers of type i over the time interval [0, t]. Assuming $\mu_1 \ge \mu_2$, then by applying the controls $T_1(\cdot)$ and $T_2(\cdot)$, the total waiting time of the fluids is minimized.

The idea behind the policy is that the server is instructed to be work conserving for all t, while fluid of type 1 is prioritized. Namely, if fluid of type 1 accumulates in the buffers, then the server's full capacity is allocated to that fluid. If such a queue does not exist, then the fluid of type 1 should still be given priority but the remaining capacity of the server is then devoted to the fluid of type 2. In any case, the server is kept work conserving, which is important for the optimality of the controls (25) and (26).

The above control policy is constructed to minimize the waiting time of the fluid corresponding to the fluid control optimization problem given above. However, it should be noted that these controls are prioritization controls which may be formulated similarly for any prioritization order (for example, as discussed below in relation to the tandem network case given in the sequel).

It will be appreciated that, for any network, there may exist an optimal policy in which the above policy applies. As the complexity of the network increases finding the optimal policy may become increasingly difficult. Nevertheless the optimal solution may comprise a prioritization optimal policy akin to that described above.

Based upon optimal control functions for the fluid system, such as those described above, a type-constrained appointment book for the stochastic problem may be preconfigured. A queuing discipline may be used such as prioritizing clients with the smallest service time (i.e., highest service rate) from among all available clients and scheduling the prioritized clients first.

Relying on the mean arrival-rates and service times of the SSQ system, we apply the above scheduling strategy over an analogues deterministic discrete system and obtain our predetermined type-constrained appointment book. In this system clients arrive deterministically according to the time-varying arrival-rates $\lambda_i(t)$ for all i, $t \geq 0$. The clients are served deterministically by the server at rates given by $\mu_i$.

**Simulated Example**

For illustrative purposes a simulated example of a scheduling system according to an embodiment of the invention is described below. The example refers to a simple system in which two client types are to be processed by a single server.

Reference is now made to Fig. 6 which is a graph representing the arrival rates for the two client types over a period of time. Such a distribution may be obtained predicatively through analysis of historical trends for example.

The mean arrival rates of the example may be represented algebraically as follows:

$$\lambda_1(t) = \begin{cases} 16t & 0 \leq t \leq 10, \\ -15t + 310 & 10 < t \leq 20, \\ 15t - 290 & 20 < t \leq 30, \\ -16t + 640 & 30 < t \leq 40 \end{cases} \quad \text{and} \quad \lambda_2(t) = \begin{cases} 50 & 0 \leq t \leq 12, \\ \frac{50}{9}t - 16\frac{2}{3} & 12 < t \leq 21, \\ -\frac{100}{19}t + \frac{4000}{19} & 21 < t \leq 40, \end{cases} \tag{27}$$

The processing rate is constant for each client type, in the example the first client type has a processing rate $\mu_1$ = 150/week and the second client type has a processing rate $\mu_2$ = 100/week.

Referring now to Fig. 7, a type-constrained appointment book for these two client types is presented. Each of the 45 columns of the book in the figure indicates a single week, with each week including a number of appointment windows assigned to either one of the two client types. The lighter shaded appointment windows are those assigned to clients of type 1 and the darker shaded appointment windows are those assigned to clients of type 2.

Note that in the first week only few customers of type 1 arrive. Type 1 clients are served as they arrive with the remaining time assigned to clients of type 2 are served. From the second week to the eighth week, more appointment windows are assigned to clients of type 1 until at the ninth week only clients of type 1 are served, as their arrival distribution peaks around that time. From the $11^{th}$ week, the arrival distribution of client type 1 falls and the arrival distribution of client type 2 increases, thus more appointment windows are assigned to client type 2. By the $21^{st}$ week the arrival distribution of client type starts to rise again peaking again at the $30^{th}$ week. Thus, during this period, more appointment windows are assigned to clients of type 1 until in the $30^{th}$ week only clients of type 1 are served. From the 31 th week clients of type 2 gain more service slots as the remaining clients of type 1 have been prioritized and thus most of them have already departed the system.

It is noted that it is a particular feature of embodiments of the current invention that the type-constrained book is being prepared for a future use by a scheduler configured to assign particular clients to appointment windows of their own type as they arrive.

Reference is made now to Fig. 8, which is a graph representing the rate of improvement in waiting time for a scheduling system using the type constrained appointment book rather than a standard first-come-first-scheduled policy. A stochastic arrival process is simulated and the waiting times for both policies are compared. In particular, a nonhomogenous Poisson arrival process was generated, with its mean arrival rates given by $\lambda_1(t)$ and $\lambda_2(t)$.

The generated arrivals are assigned in the predetermined type-constrained appointment book constructed above for each realization, and the wait is summed over all costumers. Correspondingly the arrivals are scheduled following the FCFS discipline and the wait is summed again over all customers. Fig. 8 demonstrates that the rate of improvement, i.e., appointment book method versus the FCFS, in terms of the average waiting time, is an increasing function of the overall load on the system. The rate of improvement was obtained as the difference between the total waiting time of the two methods, divided by the one obtain while applying the FCFS discipline. The load was increased further when the arrival rates were multiplied by a factor a.

**Dual Server Tandem Server Model**

Embodiments of the invention described hereinabove refer to appointment management systems for scheduling single servers. In other embodiments of the invention scheduling systems are extended to manage multiple servers. A brief treatment of dual server systems is given below, it will be appreciated that other embodiments may extend the treatment may be extended to systems having still greater numbers of servers.

Tandem network Two Servers Queueing (TTSQ) systems are common in various areas such as, Computer Networks, Communication Systems, Manufacturing Systems, the Internet etc. TTSQ is of particular use in modeling large healthcare appointment systems, such as, operating rooms, that serve many customers with distinguishable needs.

Reference is now made to Fig. 9 showing a schematic representation of a tandem network having two servers. Fluid relaxation may be used to model a stochastic system where exogenous fluid arrivals describe client arrivals and the fluid types represent the client types.

For sake of simplicity, the stochastic TSSQ system with only two client-types is considered. Clients arrive during [0, T]. The arrival process to the server, of customers of type i, may conform to some general distribution which is characterized by its time varying mean arrival rate $\lambda_i(t)$, $i \in \{1, 2\}$, $t \geq 0$. The service rates for each server are denoted by the constants $\mu_{i,1}$ and $\mu_{i,2}$, $i \in \{1, 2\}$, corresponding to the client types.

The TSSQ system, whether stochastic or deterministic, is modeled as a deterministic fluid control system. Customer arrivals are described by exogenous fluid arrivals and the various fluid types represent the various customer types. As shown schematically in Fig. 9, two types of fluid arrive at a system comprising two servers working in tandem. Each fluid is processed by each of the servers with its corresponding service rate in the same order.

In the analysis below, the pair (i, k) denotes the $k^{th}$ buffer of fluid of type i, and the rest of the notation remains the same as in the single server case. Consider the set of servers in tandem $\sigma_j = \{(i, k) : 1 \leq i \leq I, k = j\}$, j = 1, 2, and two types of fluids, I = 2. The processing time of fluid of type i in stage k is $p_{i,k}$. The notation $\mu_{i,k} = 1/p_{i,k}$ represents the rate at which the fluid of type i at the $k^{th}$ buffer is being processed. The amount of fluid of type i initially present is denoted by $x_i(0)$ and takes nonnegative real values. Let $x_{i,k}(t)$ be the total amount of fluid of type i queued at stage k at time t. $T_{i,k}(t)$ denotes the total cumulated time that the server corresponding to (i, k) spent serving customers of type i at stage k during the time interval [0, t]. Finally 1 {A} denotes the indicator function for the set A.

The control problem for the above fluid system can be formulated as follows:

$$minimize \int_0^\infty 1\left\{ \sum_{i,k\in\{1,2\}} x_{i,k}(t) > 0 \right\} dt. \qquad (31)$$

subject to

$$x_{i,1}(t) = x_i(0) + \int_0^{t\wedge T} \lambda_i(u)du - \mu_{i,1}T_{i,1}(t) \qquad i = 1, 2,\ 0 \leq t \leq T, \qquad (32)$$

$$x_{i,k}(t) = \mu_{i,k-1}T_{i,k-1}(t) - \mu_{i,k}T_{i,k}(t) \qquad k = 2,\ i = 1, 2, \qquad (33)$$

$$0 \leq \sum_{(i,k)\in\sigma_j} (T_{i,k}(t_2) - T_{i,k}(t_1)) \leq t_2 - t_1, \qquad \forall t_2 > t_1,\ t_1, t_2 \geq 0,\ j = 1, 2, \qquad (34)$$

$$x_{i,k}(t) \geq 0, \qquad T_{i,k}(t) \geq 0. \qquad (35)$$

The objective function (31), represents the total time that at least one of the fluid levels is positive. Equations (32) and (33) represent the dynamics of the system. Equation (32) considers the first buffers and in (33), the fluid level of type i at stage k at time t is the initial number of fluid of type i at stage k ($x_i(0)$ for k = 1 and 0 for k > 1) plus the number of fluid of type i served at stage k - 1 during [0, t] (given by $\mu_{i,k-1}T_{i,k-1}(t)$), minus the amount of fluid of type i processed in stage k during [0, t] (given by $\mu_{i,k}T_{i,k}(t)$). Constraint (34) is the aggregate feasibility constraint for server $\sigma_j$.

Let (P1) denote any work conserving control policy, and let (P2) denote a prioritization control policy used for the single server case. The policy presented in the following proposition is optimal (i.e., solve the abovementioned control problem optimally) for the corresponding fluid system with the maximum servers utilization - minimum makespan objective.

It is proposed that, for a couple of arrival processes, described by integrable functions and two servers working in tandem the following may be set:

- For last server controls: (P1) is applied for all t, where the arrival rats are given by $\lambda_{i,2}(t) = \mu_{i,1}\mu_{i,1}(t)$.
- For the first server controls: For all $t \geq 0$, priority is given to the fluid with the highest ratio $\{\mu_{1,1}/\mu_{1,2}, \mu_{2,1}/\mu_{2,2}\}$ by applying (P2).

The above policy minimizes the makespan and maximizes the servers utilization.

It is important to note that the above proposition specifies the controls $u_{i,k}(t)$ for all $t \in [0, T]$, i and k, in closed form, as a result of the input data of the considered problem. In order to obtain the desired controls one needs to carry out the following steps:

a. Apply (P2) with a corresponding prioritization on the first server. This way the controls $u_{i,1}(t)$, $t \geq 0$, i = 1, 2, for the first server are obtained.

b. Substitute these controls into $\lambda_{i,2}(t) = \mu_{i,1}/\mu_{i,1}(t)$, $t \geq 0$, i = 1, 2, to obtain the arrival rates to the last server.

c. Apply any (P1) (e.g., (P2) with any prioritization) for these arrival rates to obtain the controls of the second server, i.e., the functions $u_{i,2}(t)$, i = 1, 2.

According to some embodiments, the following queue discipline may be used for the original TTSQ system: *Among all available customers that arrive to the system, the customers with the largest service times ratio* $max\{p_{1,2}/p_{1,1}, p_{2,2}/p_{2,1}\}$ *are prioritized and scheduled first on the first server. The second server must be work conserving.*

By following the above policy the work is being pushed forward. The goal is to fill the buffers between the servers as quickly as possible and load the last server. The last server is work conserving, i.e., no initiated idealness is allowed and the utilization of both servers is maximized.

Accordingly, two synchronized type-constrained appointment books may be configured for the server pair. For simplicity, three types of stochastic arrival processes are considered, having rates $\lambda_{i,1}(t)$, $t \geq 0$ $i \in \{1, 2, 3\}$ and corresponding service rates, denoted by the constants $\mu_{1,1}$, $\mu_{2,1}$, $\mu_{3,1}$ at the first server and $\mu_{1,2}$, $\mu_{2,2}$, $\mu_{3,2}$ at the second.

Typically, the scheduling policy may be used for setting customer appointments. Reference is now made to Fig. 10 showing a schematic representation of the clients of the three client types 1, 2 and 3 arriving at the scheduler. The figure may illustrate the mean arrival rates of customers to the system or some known future demand of service requests flow. In either case, since $\mu_{1,1}/\mu_{1,2} \geq \mu_{2,1}/\mu_{2,2} \geq \mu_{3,1}/\mu_{3,2}$, by following the scheduling policy synchronized predetermined type-constrained appointment books may be obtained.

Referring now to Fig. 11, showing synchronized type-constrained appointment books for the TSSQ according to an exemplary embodiment of the invention, in order to minimize the makespan customers of type 1 are prioritized and being scheduled first in the predetermined book, which corresponds to the first server. Customers of type 2 are being scheduled second whereas customers of type 3 are signed in only if there are no other customers to be scheduled.

This prioritization rule maximizes the load which is applied over the last server. In order to maximize both servers utilization, the predetermined books initiate a work conserving policy for all $t \geq 0$.

The above model may represent an appointment system to which three types of client arrive. A client is assigned an appointment for a later time where the client visits both servers in order to complete its service. Thus, a dual appointment may be assigned to a client for both servers.

**Infinite Time Horizon**

Service systems in general and appointment systems in particular tend to operate in a cyclic fashion. The day, the week, the month, the year or some period that has just ended is very likely to resemble the previous period or the one that will now start. Customers demand for service varies and trends are common, but it may be possible to predict the resources that should be available to meet demand. Moreover, in many systems the demand may be known and deterministic (e.g., manufacturing systems).

The abovedescribed embodiments of the invention provide scheduling systems for systems in which service is provided for arrivals that occur during [0, T]. The server may keep working after time T to complete the work that has arrived during [0, T].

In many manufacturing systems for example such description may apply. Indeed, embodiments of the invention may be applied in any service system where such a situation repeats itself and other terms are met. Nevertheless, in some service systems the situation differs and arrivals occur for all $t \geq 0$. It will be appreciated that such systems are common, for example in health-care, communication etc. Further embodiments extend the invention to treat such systems where customers may arrive continuously as outlined briefly below.

Consider any common appointment system which uses an appointment book for its operation. It is reasonable to assume that the number of customers assigned for future appointments, at any given time, is finite. Otherwise the system would have exploded and there were costumers who would have never been treated. Since customers arrive constantly and the system proceeds to provide service, then once one appointment book ends another new one is opened. In this section we show that the concept of using 'predetermined' appointment books applies in an infinite time horizon assuming that the system indeed operates in some predictable cyclic fashion.

For simplicity suppose that customers arrive stochastically with constant mean arrival rates. These rates may vary alternately from one time interval to the next. In real life systems the server applies some policy, which is mostly arbitrary. A part of the work may pass from an interval to the one that follows in such a way that system stability may result. A system is referred to as 'stable' if the number of future appointments (i.e., the size of the queue) remains finite for all $t \geq 0$. Fig.12a shows an illustration of customer arrivals in the case where customers have cyclic expected behavior. Customer behavior repeats itself and cycles can be recognized and thus can be predicted by using the mean arrival rates as the basis for this prediction.

Consider the time period denoted in Fig.12a, with length of T time units and constant mean arrival rates. The arrival rates change from one period to the next. There are four distinct periods in the figure, but within each period the arrival rates are constant. Referring now to Fig. 12b, the view is broadened to show three cycles as a fraction of the infinite time horizon. Note that the arrival pattern of customers within each cycle is similar to the pattern shown in Fig. 12a. The time interval of length $\widetilde{T}$ indicated in the figure is considered to be a single cycle defined as the time period [0, $\widetilde{T}$ ] for the purposes of the fluid model. The same cycle length is the time base used for the model where the mean arrival rates is changing.

The abovedescribed procedure may be applied over this period and all its alike in the infinite time horizon. Namely, a type-constrained appointment book may be constructed for each of the cycles and the arrivals of each cycle will be scheduled in the corresponding book. In each appointment book, the scheduling of customers may be initiated once all the customers which belong to the previous cycle are scheduled and as the corresponding appointment book is full. This is illustrated in Fig. 13.

In Fig. 13 it is shown that the series of sequential appointment books correspond to the series of repetitive cycles determined by the arrival process of the customers. Typically, the time line of the sequence of arrival patterns overlaps the time line of the sequence of appointment books. The length of an appointment book, i.e., the amount of time it takes to complete the service indicated in it, depends on the service times of the customers signed in. In any case, a predetermined appointment book is used for customers that arrive during the cycle for which it was designed. All the appointment books are artificially glued together to create one inclusive predetermined appointment book.

Two distinct cases regarding the arrival process of customers to the system may be identified. Firstly, where the arrival process is deterministic and known (as is common in manufacturing etc). Secondly, where the arrival process is stochastic but predictable (as is common in health-care etc).

In the first case, once the exact demand is known for some period then a recurring predetermined appointment book may be constructed for that period.

In the second case, it may be assumed that there exist a period which can be defined as a cycle. Under the assumption that customers behavior is predictable to some extent and that such cycles can be recognized, then a corresponding predetermined appointment book can be constructed. This appointment book must correspond to a specific cyclic period.

In either case the optimization is carried out within the framework of the book. Essentially, customers are referred to future appointments that are already set in a predetermined appointment book. The appointment book must correspond to the cycle to which these customers belong.

**Selected Applications**

It will be appreciated that scheduling systems such as those described herein may be useful for a variety of service providers serving clients in very different situations. A small number of examples are discussed briefly below, it will be appreciated, however that other service providers may also benefit from embodiments of the invention.

Healthcare

Embodiments of the invention maybe adopted for modeling large appointment systems, for example, operating rooms, MRI and CT scan departments and the like. Consider a single server, such as a CAT scanner, which serves many clients with distinguishable needs. Deterministic fluid relaxations may be used to model stochastic systems of this type. Exogenous fluid arrivals describe customer arrivals and the fluid types represent the customer types. A graphical view of the fluid system behavior may be identified which enable optimal control solutions to be constructed for the fluid models. The solutions may be described by a set of optimal control functions. The optimal control enables the type-constrained book to be prepared for a future use configured to assign the clients in any of these appointment systems.

The Internet

Optimal control policies are desired by appointment scheduling operators as well as by internet service providers (ISP). ISPs are particularly interested in servers' capacity management and resources control. One can think of our single server system, as representing a resource of an internet service provider. An ISP provides service for various customer types requiring varying bandwidth communication channels. A bandwidth of a channel is the capacity allocated for information transmissions. Arrival rate functions can describe the means of bandwidth demand requested by the ISP's clients. Equitable service is a basic requirement (i.e., the objective) from Internet services. A Web Hosting Service (WHS) is a type of Internet hosting service that allows individuals and organizations to provide their own websites accessible via the World Wide Web. Web hosts are companies which provide space (i.e., the resource) on a server for the use of their clients (i.e., the demand) as well as providing Internet connectivity, typically in a data center. Web hosts typically aspire to provide equitable service for their clients.

One question that arises while operating WHSs or by ISP is: What is the capacity ratio a server should devote to each of its client types at any unit of time? Evidently, since each arrival process depends on time, so should this ratio.

A fluid control optimization problem may be formulated for a single server system with several classes of fluids. The abovedescribed policy is presented for minimizing the makespan (the time at which the last customer ends his service) while assigning each fluid type a certain varying proportion of the server capacity. The policy may assure that the stream of any type of fluid is never completely blocked. The ratio between the amount of fluid queued in a buffer, and the total amount of fluid which has arrived to that buffer, since the last time all the buffers were empty, is kept equal between the various fluid types. Such a policy is termed an Equitable Queueing (EQ) policy. In the context of appointment systems, following such a policy means that each customer type is provided with a share of the server capacity which corresponds to its demand. We present the EQ policy and analyze it. The analysis provides insights into the way the fluid relaxation of a single server system operates and can be controlled.

Punctuated flow and periodicity have been observed in Internet communications traffic. Part of the reason for managing difficulties lies in the complex dynamics resulting from a large number of interconnected computers that are controlled based on limited local information. It may be possible to obtain more relevant information at each node in the network through explicit congestion notification algorithms. The system designer may devise algorithms to make use of this global information regarding varying congestion levels and network topology.

Wireless Networks

It is evident today that wireless networks are only beginning to impact communications and computer networking. In a wireless network there are scheduling and routing decisions that are nearly identical to those faced in management of the Internet. The resources in a multiple-access wireless network include transmission power and bandwidth, as well as multiple paths between users and stations.

Wireless networks are subject to significant variability due to fading and path losses. Consequently, maximal transmission rates can be difficult to quantify, especially in a multi-user setting. One significant difference between manufacturing and communication applications is that achievable transmission rates in a communication system depend upon the specific coding scheme employed. High transmission rates require long block-lengths for coding, which corresponds to long delays.

A second difference is that errors resulting from mutual interference from different users need not result in disaster. Errors arising through collisions can be repaired, up to a point, by efficient coding. These features make it difficult to quantify the capacity region in a communication networks, and wireless networks in particular. The solutions and view of the problem which we present in our research can be utilized for such cases.

Flexible Manufacturing

Within the manufacturing domain, complexity is evident for example in the manufacture of semiconductors. A factory where semiconductors are produced is known as a wafer fabrication facility, or wafer-fab.
A large wafer-fab will produce thousands of wafers each month, and a single wafer can hold thousands of individual semiconductor chips, depending on the size of the chips. Control of a wafer-fab or any other complex manufacturing facility involves many issues, including resource allocation; scheduling to minimize inventory, and satisfy constraints such as deadlines, finite buffers, and maximum processing rates. A key constraint in manufacturing applications is that one machine can only process one set of products at a time. Objectives of prioritization nature are significant in semiconductor manufacturing where one product (e.g. a wafer) may be considered as more important or expansive for the course of manufacturing, and must be completed with other products with similar requirements.
The controls we provide can be applied in semiconductors manufacturing enabling prioritization of one route over another. Given the demand for wafers and demand for maximum processing rates the model and graphical view we provide enable the construction of appropriate controls which can help in managing the whole manufacturing process. In the manufacture of semiconductors there may be hundreds of processing steps, and many different products. The control solution should have reasonable complexity in spite of the complexity of the system where the core activity is enclosed.

Power Distribution

Regulation of power networks is further complicated by deregulation. Private power generators now provide a significant portion of electricity in the U.S., whose owners seek to extract the maximal profit from the utilities who serve as their clients. However, the transmission network remains regulated by independent system operators (ISOs) who attempt to distribute transmission access fairly, and maintain system reliability. Among the stated goals of deregulation are increased innovation, efficiency of power procurement, and reliability of power delivery.
Even under average conditions, price and demand for power are periodic, and both exhibit significant variability. A power grid differs from many other network systems in that capacity must meet demand at every instant of time. If not, the transmission system may become unstable and collapse, with severe economic consequences to follow. In order to ensure reliable operation it is necessary to schedule power generation capacity beyond the expected demand, called power reserves. Hence operation of the power grid is based on algorithms for forecasting demand, along with rules to determine appropriate power reserves.
The deterministic EQ power flow model does not typically neglect important dynamic issues such as limited ramp-up rates and variability that may be favored in many recent economic studies. A fluid equilibrium model such as presented above may be used to define network load. It is a feature of embodiments of the invention that models are formulated which are simple enough for control design, and for performance approximation to compare control solutions.

Call Centers

"Returning Call" services may be offered by many Call centers. In such services the customer contacts the system through an appropriate phone line, the system is then informed of the customer's type and needs and the call is then disconnected and a server calls back to the customer later on to provide the service.
Such systems are operationally almost identical to appointment scheduling systems and have started to exist and spread for the same reasons. Periodicity and trends in customer arrivals are commonly used for making managerial decisions, such as, levels of staffing, number of phone lines, working hours etc. Similarly, our control solutions consider customer demands which are expressed as a set of mean arrival rates functions and the system capacity to determine the way the service (i.e., the appointed times at which the customers are reconnected) should be managed. Following our controls and using our predetermined appointment book construction method customers can be prioritized. The prioritization control model and the EQ controls may be relevant as the basis of a type-constrained appointment book for use with such systems.

Transportation

In systems involving aircrafts awaiting service of an airport the customers are the aircrafts and the server is the airport. Once landed an aircraft typically awaits for loading or unloading people and luggage, for being fueled or for other maintenance services. Embodiments of the invention and in particular of the predetermined appointment book may readily be used for determining the schedule for the aircrafts services while making efficient decisions of priority. The aircraft arrival rates and types may be based upon the statistical history of demand for services. The airport capacity and the mean service rates of the given services are generally known so the abovedescribed methods may be applied.

A similar situation is found in seaports, where ships await loading or unloading. The ships sometimes circulate and wait outside the port for having service. The port management on the other hand would like to know, what is the best way to prioritize the various services it offers, while being as profitable and efficient as possible. It will be apparent that embodiments of the invention may be applied to optimize scheduling to suit such requirements.

Water Desalination and Liquids control

It is further noted that the fluid models used in embodiments of the present invention, may be used to model actual extant fluids, for example in water treatment plants. In desalination plants for example, the use of tandem pumps may be common, In order to make such systems cost effective, it may be useful to optimize the fluid control solutions using scheduling systems according to embodiments of the invention.

**General Embodiments**

In other embodiments of the invention the invention may be extended further in a number of ways. In a first generalization, any of the systems considered above, the number of customer arrival types may be of any natural value.

According to a second generalization, a weighted minimum waiting time objective, sometimes termed the minimum waited holding cost objective in the MW-SSFR (minimum wait single server fluid relaxation), may be considered. The optimal control solution may be used directly by defining the function C(t), $t \geq 0$ to be the accumulated cost function in unites of cost instead of time and the rest follows.

According to a still a third generalization, the number of servers and the complexity of the network may be unbounded.

The scope of the present invention is defined by the appended claims and includes both combinations and sub combinations of the various features described hereinabove as well as variations and modifications thereof, which would occur to persons skilled in the art upon reading the foregoing description.

In the claims, the word "comprise", and variations thereof such as "comprises", "comprising" and the like indicate that the components listed are included, but not generally to the exclusion of other components.

**Claims**

1. A scheduling system for managing resource allocation by at least one service provider, the system **characterized by** at least one type-constrained appointment book comprising a plurality of appointment windows wherein said appointment windows are assigned to client types.

2. The system of claim 1 further comprising a scheduler for receiving scheduling requests from at least one client, identifying the characteristic client-type of said client and allocating at least one appointment window assigned to said characteristic client-type to said client.

3. The system of claim 1 wherein said type constrained appointment book is configured using an optimization algorithm.

4. The system of claim 3 wherein said optimization algorithm is based upon historical data pertaining to said client types.

5. The system of claim 4 wherein said historical data relates to at least one factor selected from a group consisting of demand by clients of said client type, arrival rates of clients of said client type, processing times for clients of said client type and service capacity of the service provider.

6. The system of claim 3 wherein said optimization algorithm is based upon a model wherein clients of each client type are modeled as a fluid.

7. The system of claim 6 wherein each said fluid is **characterized by** at least one of a mean arrival rate and a processing time.

8. The system of claim 7 wherein said mean arrival rate varies over time.

9. The system of claim 3 wherein said optimization algorithm is based upon future demand data pertaining to said client types.

**10.** The system of claim 3 wherein said optimization algorithm is optimized for at least one parameter selected from a group consisting of: minimal flow-time, minimal makespan - equitable queuing and minimal waiting time.

**11.** The system of claim 1 for managing resource allocation by at least two service providers wherein type-constrained appointment books are prepared for each said service provider.

**12.** The system of claim 1 wherein said service provider is selected from a group consisting of internet service providers (ISPs), wireless communication networks, flexible manufacturing plants, power distribution regulators, call centers and transport control systems.

**13.** The system of claim 1 wherein said client types are **characterized by** at least one factor selected from a group consisting of average demand by clients of said client type, arrival rates of clients of said client type, processing times for clients of said client type.

**14.** A method for managing resource allocation by at least one service provider to a plurality of clients, the method comprising the following steps:

step (a) - preparing at least one type-constrained appointment book comprising a plurality of appointment windows, said appointment windows being assigned to client types;
step (b) - receiving a processing request from at least one arriving client;
step (c) - identifying a characteristic client-type of said arriving client;
step (d) - allocating to said arriving client, an appointment window assigned to said characteristic client-type.

**15.** The method of claim 14 wherein said step (a) comprises the following sub-steps:

step (a1) - obtaining historical data pertaining to said client types;
step (a2) - modeling arrival of said clients of each client type are modeled as a fluid;
step (a3) - solving an optimization problem, optimized for at least one parameter selected from a group consisting of: minimal flow-time, minimal makespan - equitable queuing, minimal waiting time or some desired prioritization rule.

**16.** The method of claim 15 wherein said historical data relates to at least one factor selected from a group consisting of demand by clients of said client type, arrival rates of clients of said client type, processing times for clients of said client type and service capacity of the service provider.

**17.** The method of claim 15 wherein each said fluid of the model is **characterized by** at least one of a mean arrival rate, a processing time and a time-varying mean arrival rate distribution.

**18.** The method of claim 14 for managing resource allocation by at least two service providers wherein, during step (a) type-constrained appointment books are prepared for each said service provider.

**19.** The method of claim 14 for managing resource allocation for at least one service provider selected from a group consisting of internet service providers (ISPs), wireless communication networks, flexible manufacturing plants, power distribution regulators, call centers and transport control systems.

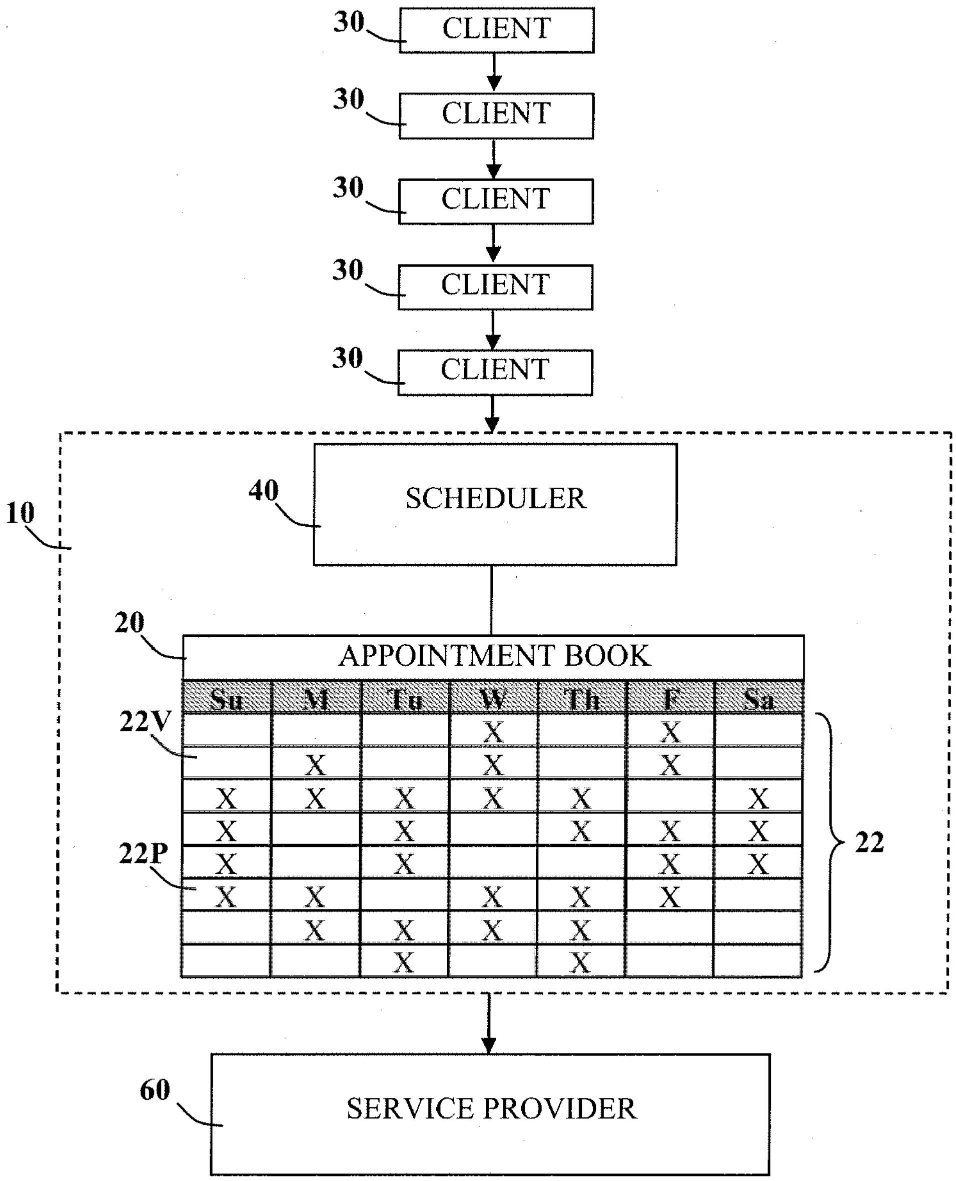
30
CLIENT
30
CLIENT
30
CLIENT
30
CLIENT
30
CLIENT
10
40
SCHEDULER
20
APPOINTMENT BOOK
Su
M
Tu
W
Th
F
Sa
22V
22P
22
60
SERVICE PROVIDER

**Fig. 1**

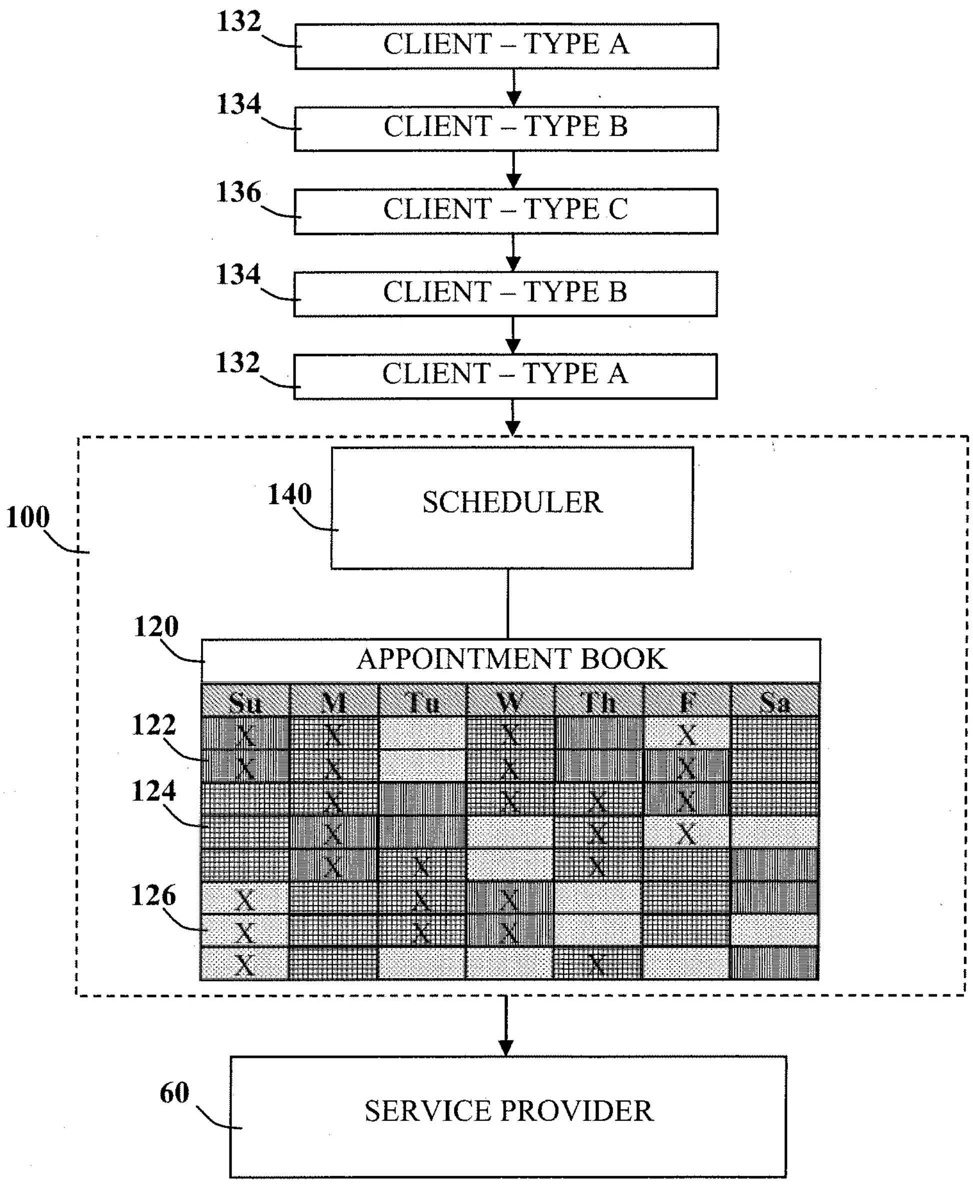
132
CLIENT – TYPE A
134
CLIENT – TYPE B
136
CLIENT – TYPE C
134
CLIENT – TYPE B
132
CLIENT – TYPE A
100
140
SCHEDULER
120
APPOINTMENT BOOK
Su
M
Tu
W
Th
F
Sa
122
124
126
60
SERVICE PROVIDER

Fig. 2

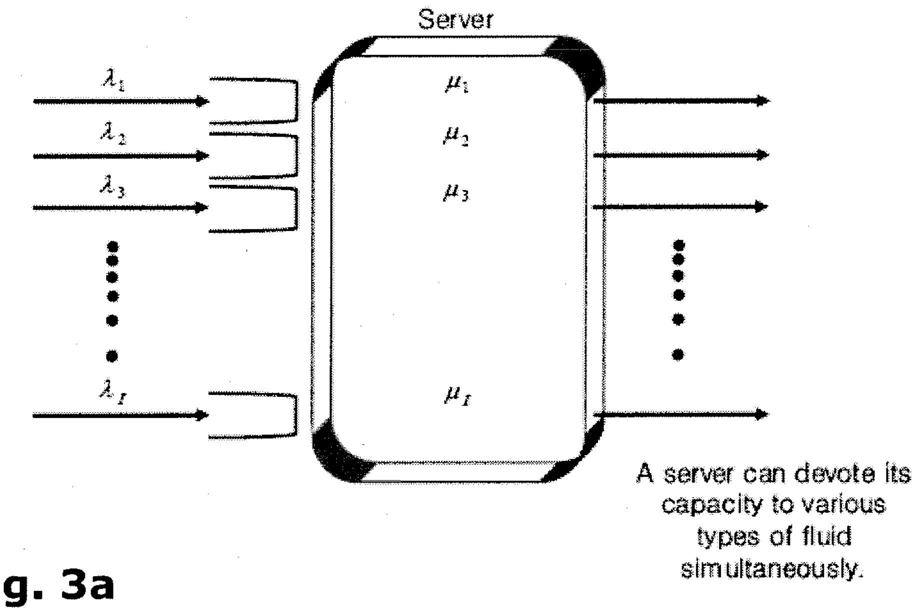
Server
$\lambda_1$
$\lambda_2$
$\lambda_3$
$\lambda_I$
$\mu_1$
$\mu_2$
$\mu_3$
$\mu_I$
A server can devote its capacity to various types of fluid simultaneously.

**Fig. 3a**

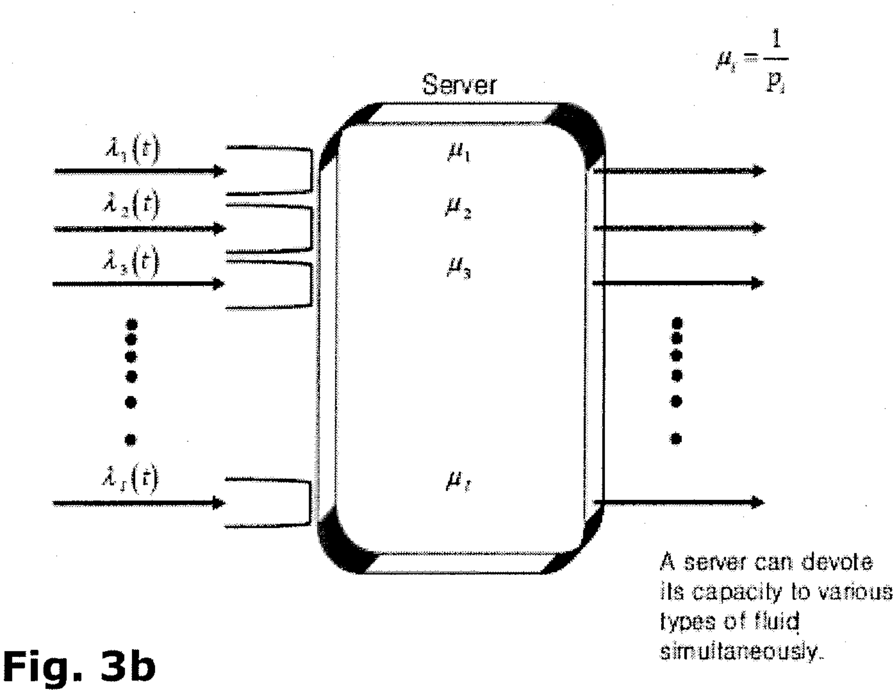
$\mu_i = \frac{1}{P_i}$
Server
$\lambda_1(t)$
$\lambda_2(t)$
$\lambda_3(t)$
$\lambda_I(t)$
$\mu_1$
$\mu_2$
$\mu_3$
$\mu_I$
A server can devote its capacity to various types of fluid simultaneously.

**Fig. 3b**

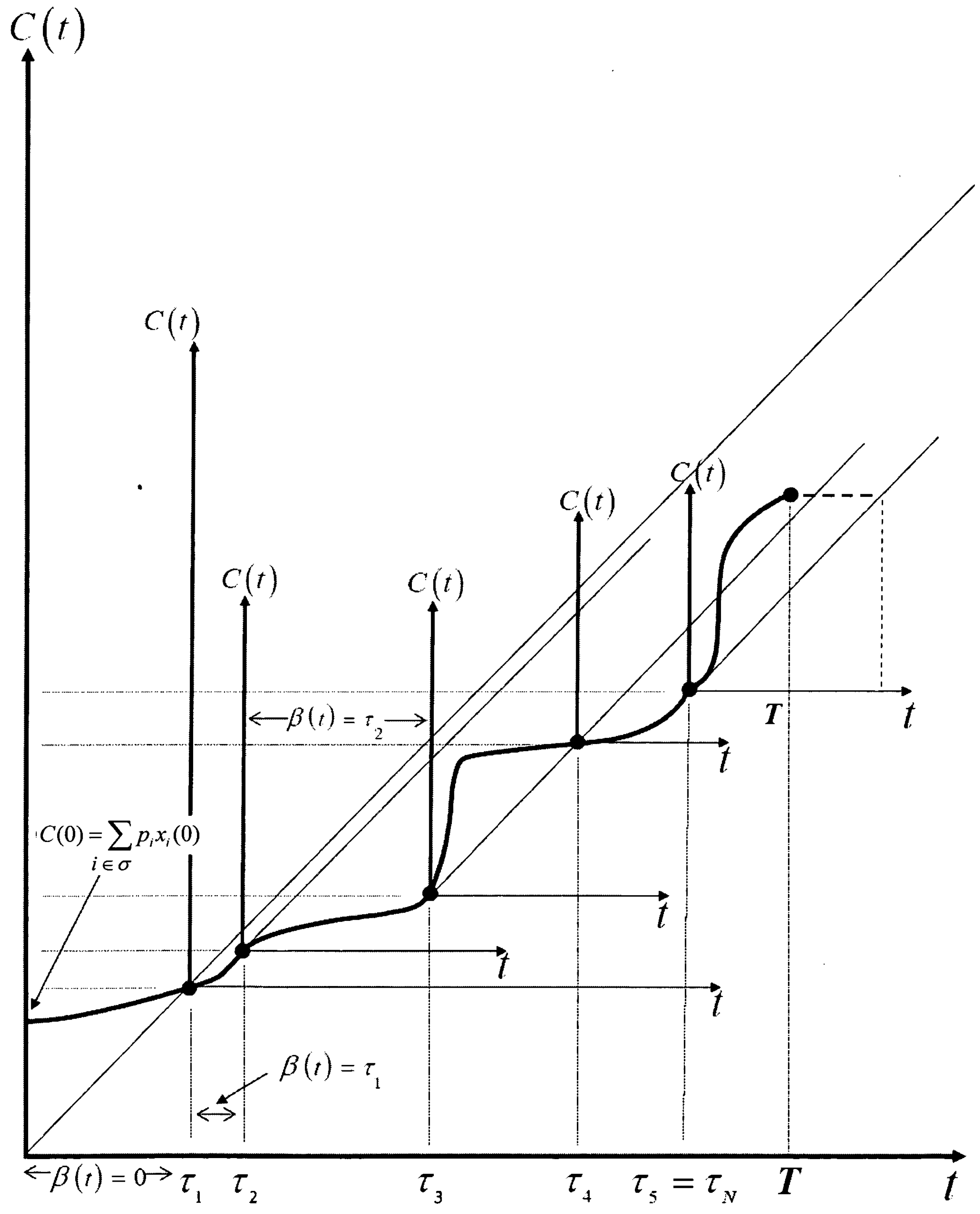

$C(t)$
$C(t)$
$C(t)$
$C(t)$
$C(t)$
$C(t)$
$\beta(t) = \tau_2$
$C(0) = \sum_{i \in \sigma} p_i x_i(0)$
$\beta(t) = \tau_1$
$\beta(t) = 0$
$T$
$t$
$\tau_1$ $\tau_2$ $\tau_3$ $\tau_4$ $\tau_5 = \tau_N$ $T$ $t$


FIG. 4

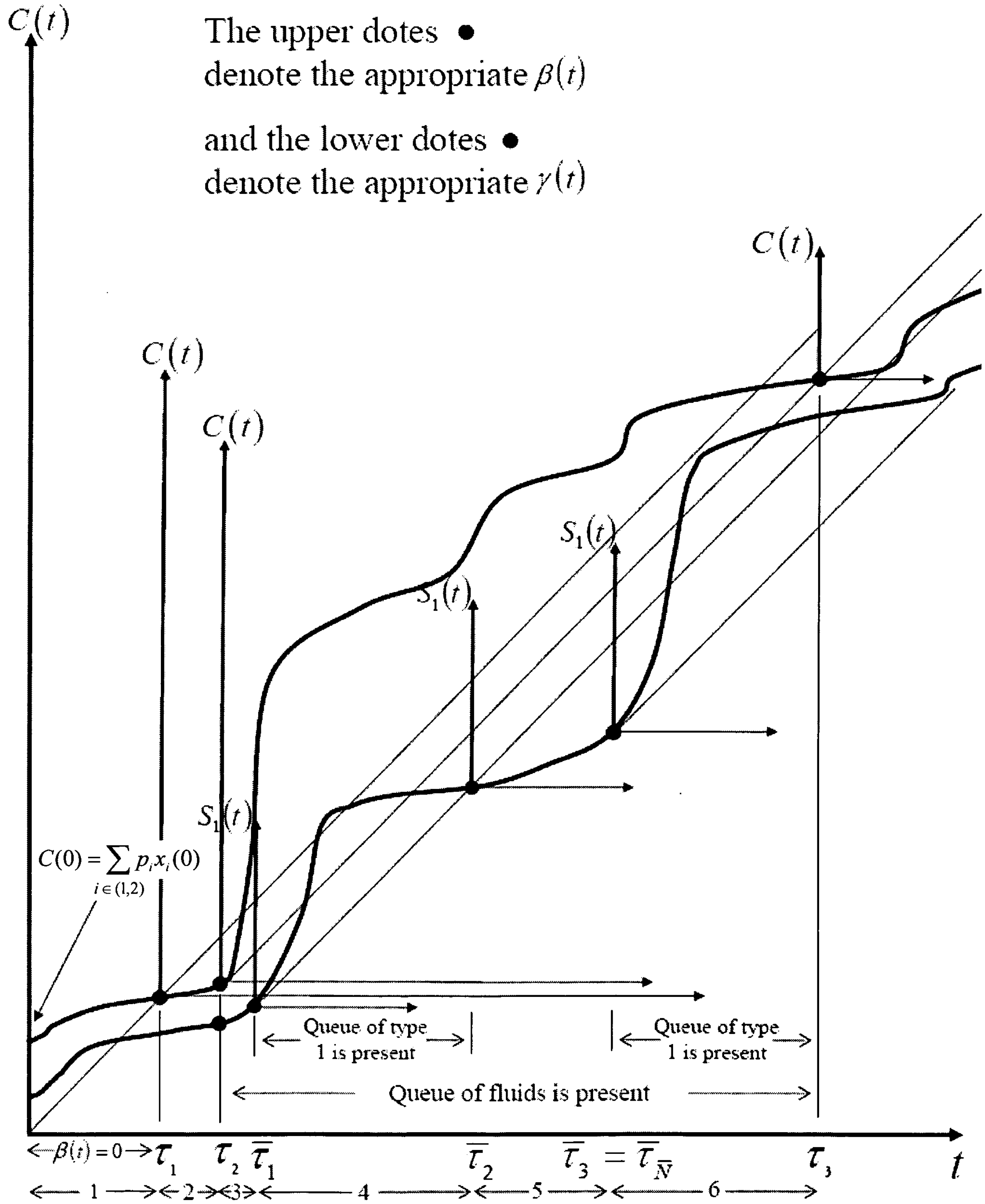
C(t)
The upper dotes •
denote the appropriate β(t)
and the lower dotes •
denote the appropriate γ(t)
C(t)
C(t)
C(t)
S1(t)
S1(t)
S1(t)
C(0) = Σ pixi(0)
i ∈ (1,2)
Queue of type 1 is present
Queue of type 1 is present
Queue of fluids is present
β(t) = 0
τ1 τ2 τ̄1 τ̄2 τ̄3 = τ̄N̄ τ3
t
1 2 3 4 5 6

Fig. 5

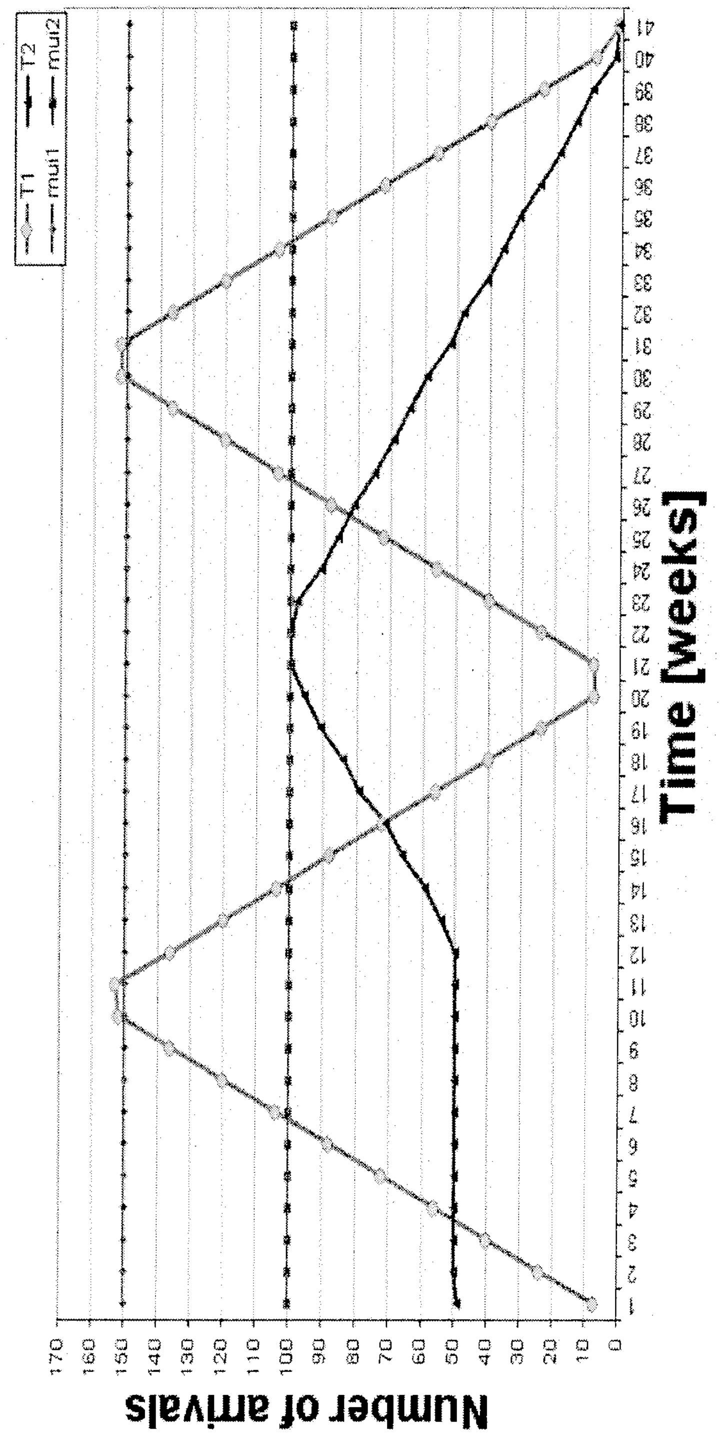


Fig. 6

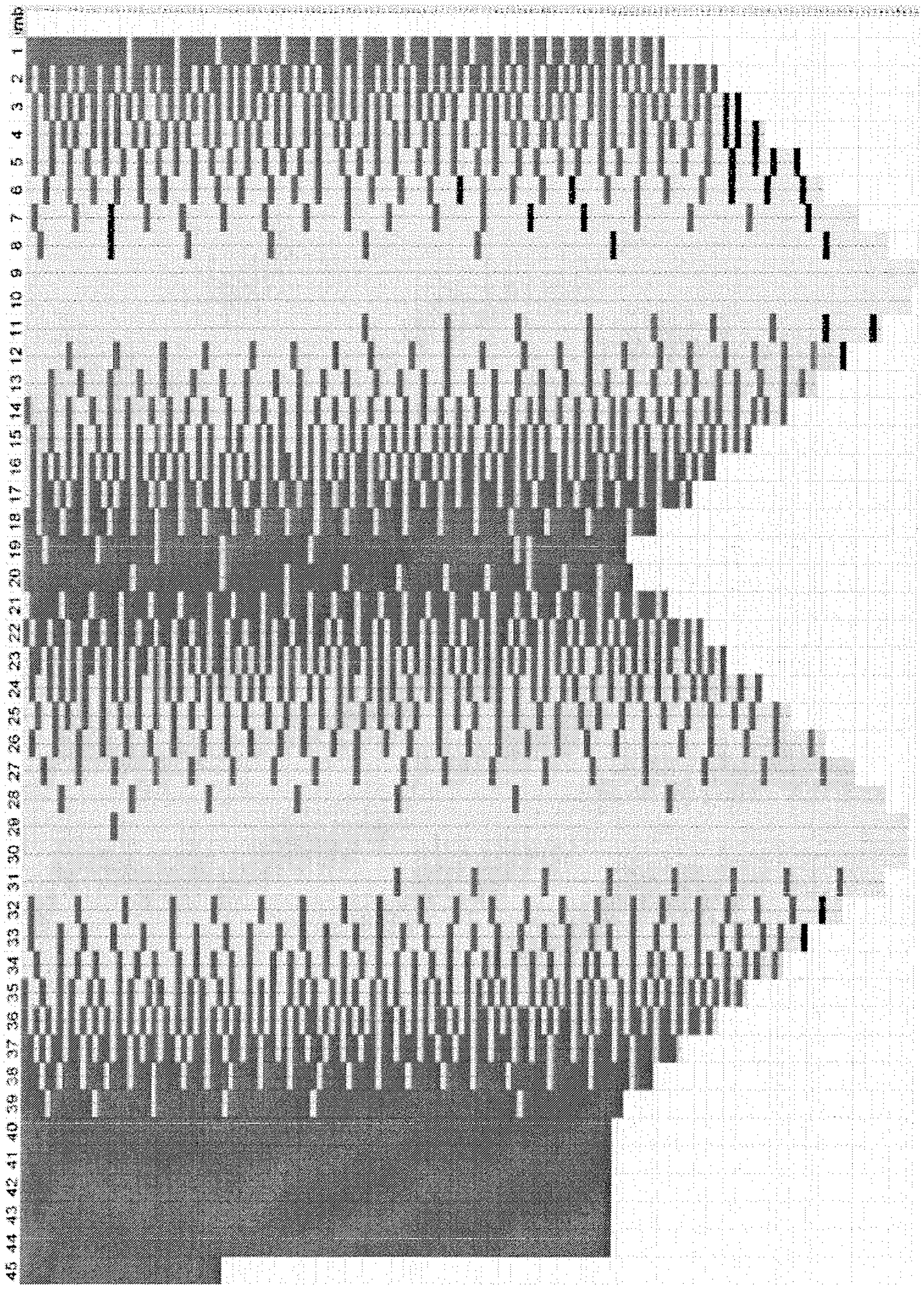
mb
1 2 3 4 5 6 7 8 9 10 11 12 13 14 15 16 17 18 19 20 21 22 23 24 25 26 27 28 29 30 31 32 33 34 35 36 37 38 39 40 41 42 43 44 45

**Fig. 7**

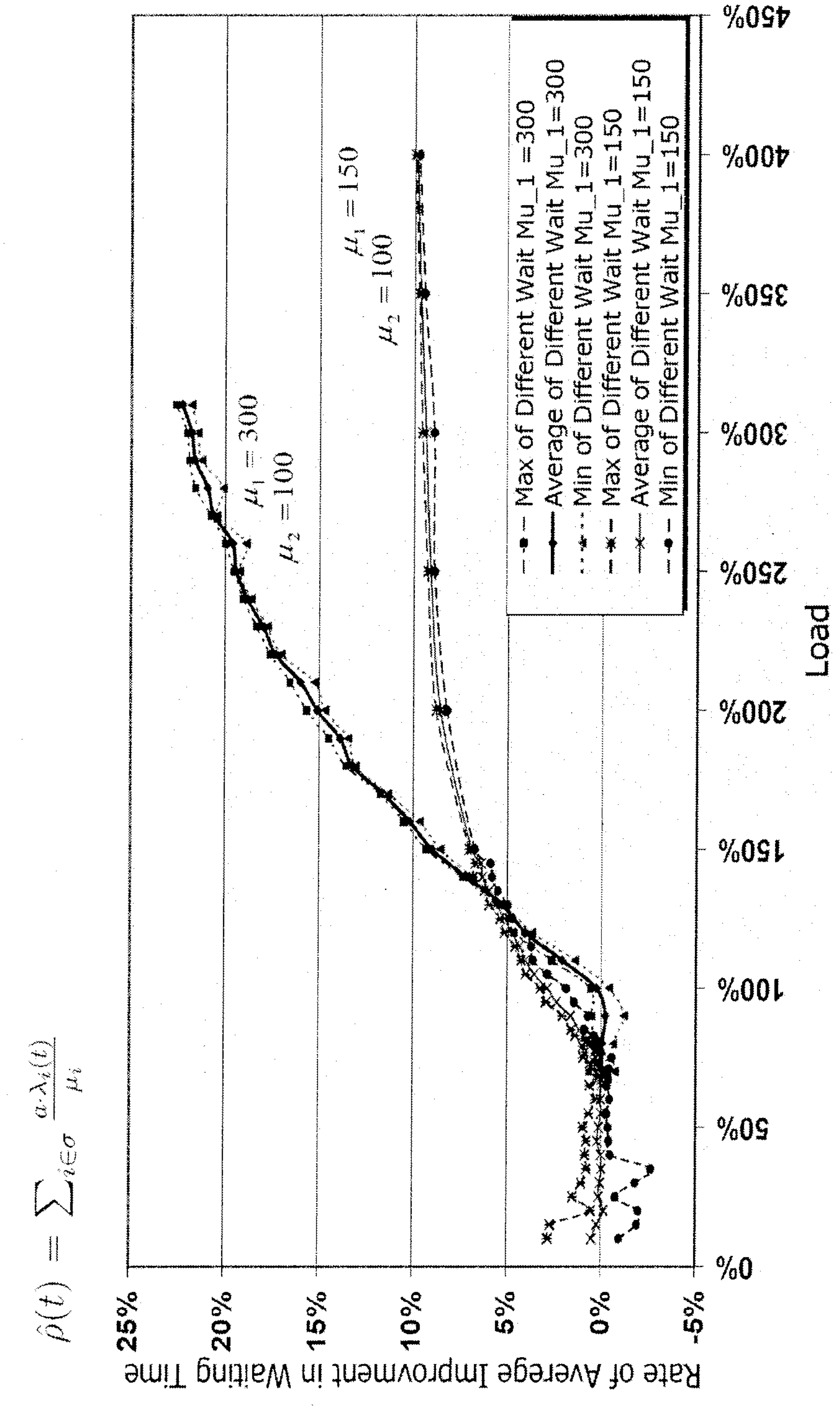
$\hat{\rho}(t) = \sum_{i \in \sigma} \frac{a \cdot \lambda_i(t)}{\mu_i}$
Rate of Averege Improvment in Waiting Time
25%
20%
15%
10%
5%
0%
-5%
0%
50%
100%
150%
200%
250%
300%
350%
400%
450%
Load
$\mu_1 = 300$
$\mu_2 = 100$
$\mu_1 = 150$
$\mu_2 = 100$
Max of Different Wait Mu_1 =300
Average of Different Wait Mu_1=300
Min of Different Wait Mu_1=300
Max of Different Wait Mu_1=150
Average of Different Wait Mu_1=150
Min of Different Wait Mu_1=150

Fig. 8

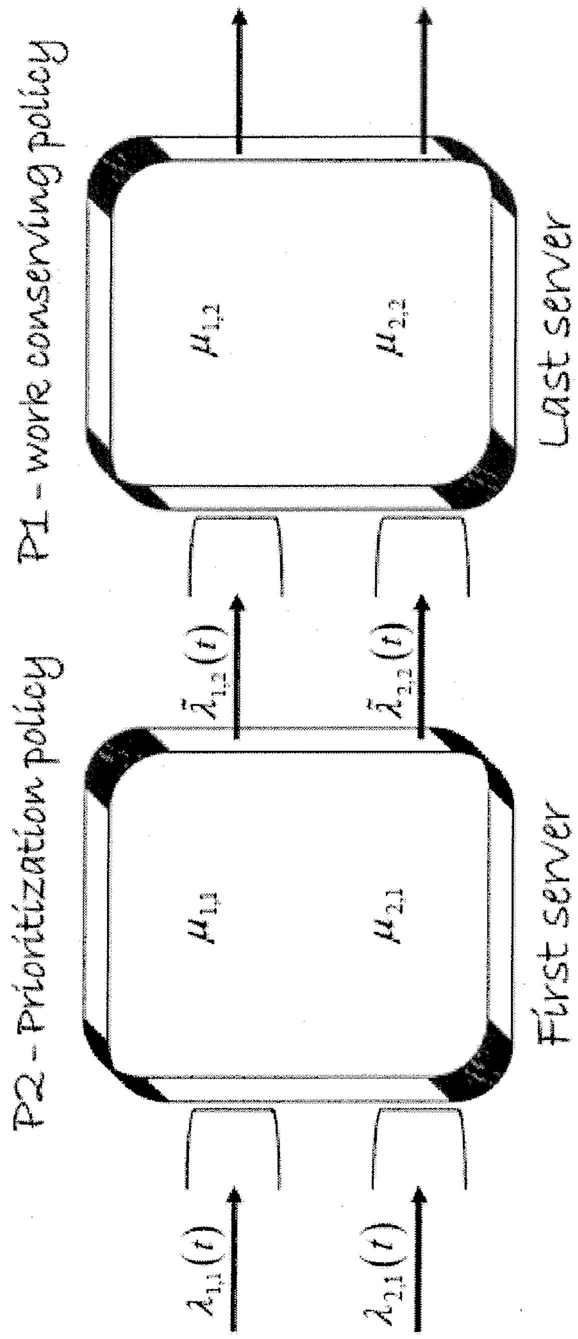
P2 - Prioritization policy
P1 - work conserving policy
$\lambda_{1,1}(t)$
$\lambda_{2,1}(t)$
$\mu_{1,1}$
$\mu_{2,1}$
$\tilde{\lambda}_{1,2}(t)$
$\tilde{\lambda}_{2,2}(t)$
$\mu_{1,2}$
$\mu_{2,2}$
First server
Last server

**Fig. 9**

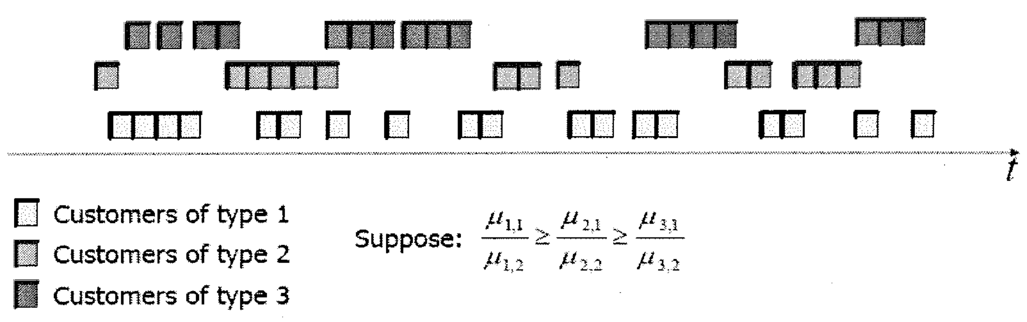
t
Customers of type 1
Customers of type 2
Customers of type 3
Suspose: $\frac{\mu_{1,1}}{\mu_{1,2}} \geq \frac{\mu_{2,1}}{\mu_{2,2}} \geq \frac{\mu_{3,1}}{\mu_{3,2}}$

**Fig. 10**

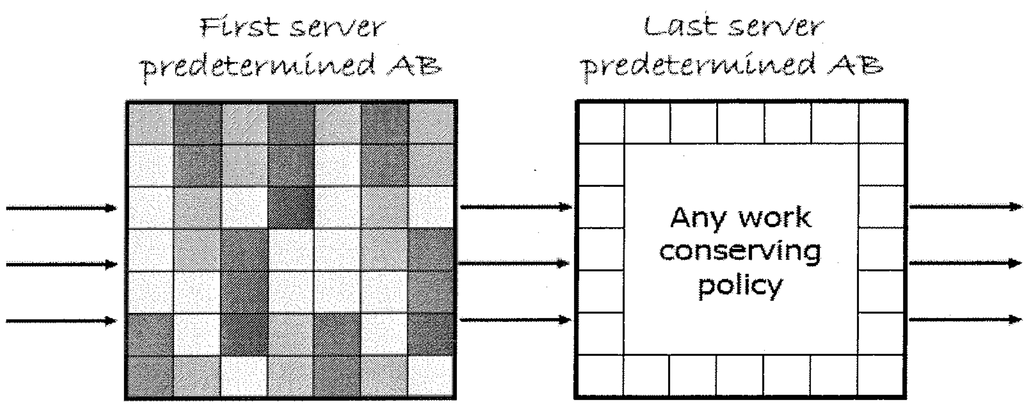
First server predetermined AB
Last server predetermined AB
Any work conserving policy

**Fig. 11**

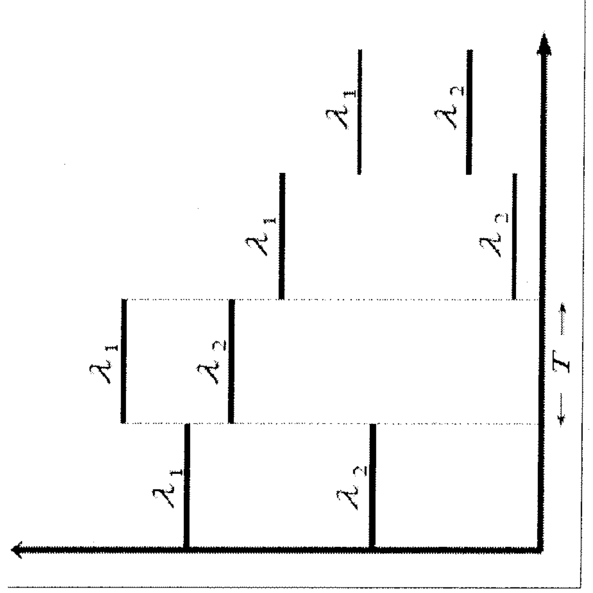


Fig. 12a

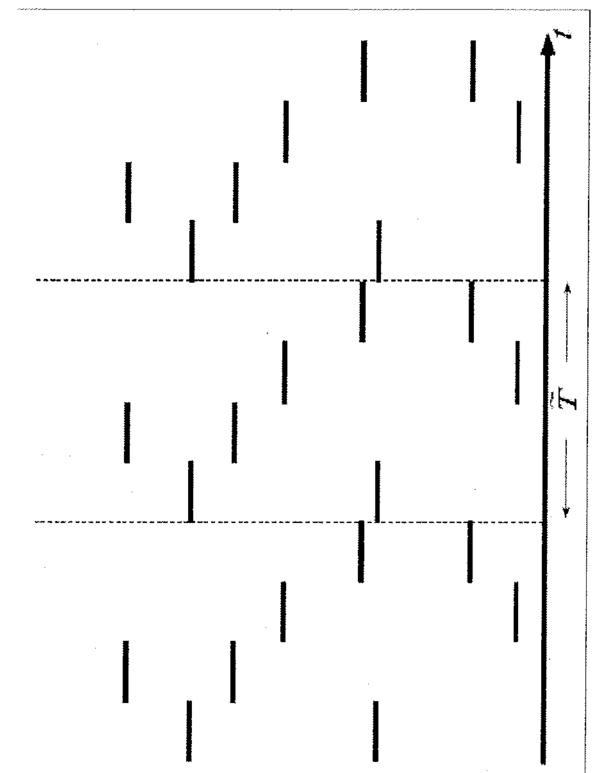


Fig. 12b

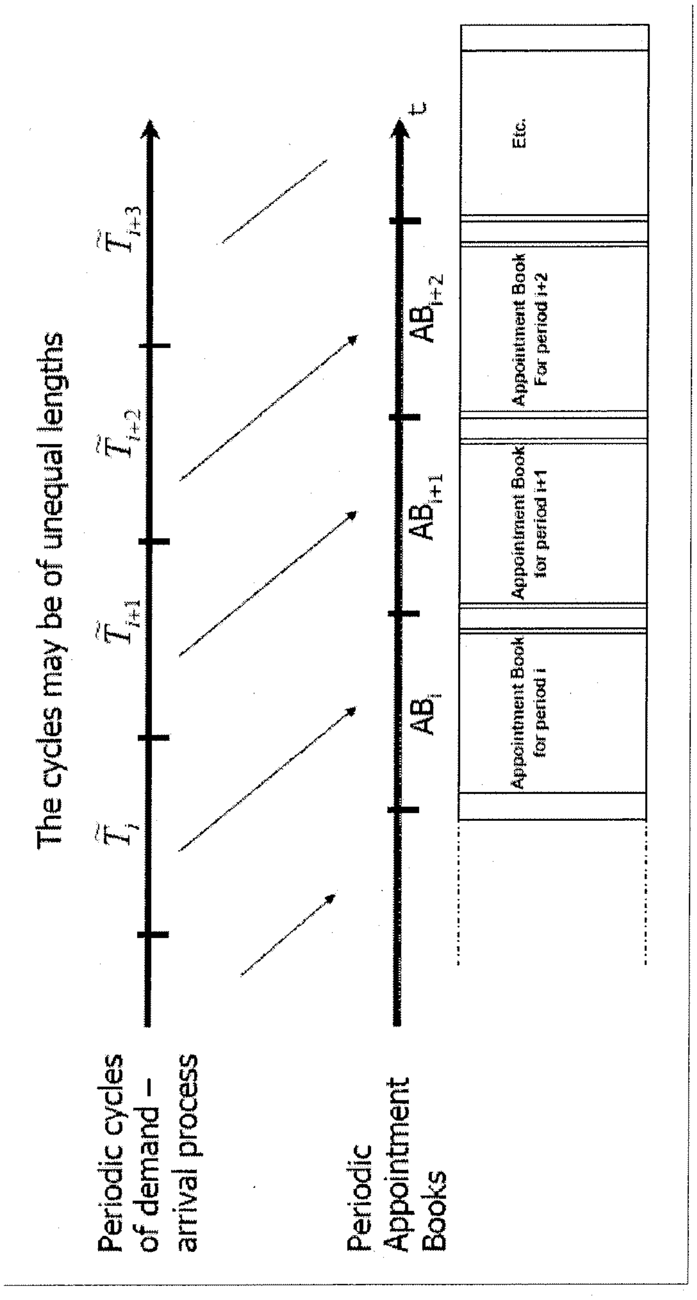

The cycles may be of unequal lengths
Periodic cycles of demand – arrival process
Periodic Appointment Books
$\tilde{T}_i$
$\tilde{T}_{i+1}$
$\tilde{T}_{i+2}$
$\tilde{T}_{i+3}$
$AB_i$
$AB_{i+1}$
$AB_{i+2}$
t
Appointment Book for period i
Appointment Book for period i+1
Appointment Book For period i+2
Etc.


Fig. 13

Europäisches Patentamt
European Patent Office
Office européen des brevets

# EUROPEAN SEARCH REPORT

Application Number
EP 09 16 8021

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | "STATEMENT IN ACCORDANCE WITH THE NOTICE FROM THE EUROPEAN PATENT OFFICE DATED 1 OCTOBER 2007 CONCERNING BUSINESS METHODS - EPC / ERKLAERUNG GEMAESS DER MITTEILUNG DES EUROPAEISCHEN PATENTAMTS VOM 1.OKTOBER 2007 UEBER GESCHAEFTSMETHODEN - EPU / DECLARATION CONFORMEMENT AU COMMUNIQUE DE L'OFFICE EUROP"<br>JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE,<br>1 November 2007 (2007-11-01), pages 592-593, XP007905525<br>ISSN: 0170-9291<br>* Statement in accordance with the Notice from the European Patent Office dated 1 October 2007 concerning business methods(OJ 11/2007; p592-593)<br>The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention.<br>The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No | 1-19 | INV.<br>G06Q10/00<br><br>TECHNICAL FIELDS SEARCHED (IPC)<br>G06Q |

The present search report has been drawn up for all claims

1

| Place of search | Date of completion of the search | Examiner |
|---|---|---|
| The Hague | 22 January 2010 | Cîrstet, Andrei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 09 16 8021

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | documentary evidence was therefore considered required. * ----- | | |

TECHNICAL FIELDS SEARCHED (IPC)

The present search report has been drawn up for all claims

| Place of search | Date of completion of the search | Examiner |
|---|---|---|
| The Hague | 22 January 2010 | Cîrstet, Andrei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2003158611 A, Weiss
- US 7277391 B
- US 7298699 B
- US 2002188648 A